# EUROPEAN PATENT SPECIFICATION

(11) **EP 2 610 027 B1**
(45) Date of publication and mention of the grant of the patent: **02.09.2015**
(21) Application number: 11010308.2
(22) Date of filing: 30.12.2011
(51) Int. Cl.: B23H 7/20, B23H 1/02

(54) **Electric discharge machining method and apparatus**
Verfahren und Vorrichtung zur Funkenerosion
Procédé et dispositif d'électroérosion

(43) Date of publication of application: 03.07.2013
(73) Proprietor: Agie Charmilles SA, 6616 Losone (CH)
(72) Inventor: Maradia, Umang, 8051 Zürich (CH); Knaak, Reto, 6612 Ascona (CH); Dal Busco, Walter, 6600 Locarno (CH)
(74) Representative: De Colle, Piergiacomo

(56) References cited:
- EP-A1- 1 918 054
- WO-A1-2009/089840
- US-A1- 2008 203 068
- VALENTINÈIÈ J ET AL: "Selection of optimal EDM machining parameters for the given machining surface", PROCEEDINGS OF THE 8TH INTERNATIONAL CONFERENCE ON MANAGEMENT OF INNOVATIVE TECHNOLOGIES - MIT'2005,, 1 January 2005 (2005-01-01), pages 217-225, XP008152316, ISBN: 961-6238-96-5
- VALENTINCIC J ET AL: "A model for detection of the eroding surface based on discharge parameters", INTERNATIONAL JOURNAL OF MACHINE TOOLS AND MANUFACTURE, ELSEVIER, US, vol. 44, no. 2-3, 1 February 2004 (2004-02-01), pages 175-181, XP008152315, ISSN: 0890-6955, DOI: 10.1016/J.IJMACHTOOLS.2003.10.013 [retrieved on 2003-12-05]
- GFAGIECHARMILLES: "Zero Wear - the Perpetuum mobile of die -sinking EDM", 20090101, no. 4, 1 January 2009 (2009-01-01), page 1, XP007920660,

## Description

### Field of the Invention

The present invention relates to a method for controlling an electric discharge machining apparatus and to such an electric discharge machining apparatus.

### Background of the Invention

Generally, in known electrical discharge machining, electric energy is applied in the form of discrete electrical impulses across a machining gap filled with a machining fluid or liquid dielectric (e.g. oil). The discrete electrical impulses cause a succession of electrical discharges between a tool electrode and a workpiece. The space between the tool electrode and the workpiece defines the machining gap also referred to as working gap. The electrical discharges lead to a material removal from the workpiece and, additionally, to wear of the tool electrode.

Typically, as material removal proceeds the tool electrode is advanced relatively to the workpiece by servo feed means. The working gap distance is continuously controlled according to the instantaneous process conditions. A signal representing the current working gap distance (e.g. the ignition delay and/or mean gap voltage) is compared with a value representing a desired working gap distance (reference value) and the resulting error between these values is computed to generate a new command value for the drive motor in order to adjust the correct working gap distance. In this way the control of the relative position of workpiece and electrode allows the creation of consecutive material-removal discharges.

The material-removal and the discharges lead to a contamination of the machining gap region with erosion debris, process byproducts, thermal decomposition products of the dielectric and gases. It is known to remove such contaminations by flushing the machining gap region with fresh machining fluid and by cyclically retracting the tool electrode away from the workpiece.

From US 4,288,675 A it is known to use (discharge) impulse trains which each consist of multiple machining impulses and to vary the duration and/or the off-time of consecutive impulse trains to reduce electrode wear. The impulse duration of each single impulse and the off-time between each single impulse of the impulse train are preset before machining and depend, e.g. on the electrode materials. The duration or on-time of an impulse train and/or the off-time between consecutive impulse trains is adjusted during machining in accordance with a detected rate or relative advance movement of the tool electrode so as to maintain the current density along machining surfaces substantially constant at a desired value in spite of change in the machining area during relative advance movement of the tool electrode.

From US 4,503,309 A it is known to use increased current pulses intermittently in an impulse train in order to achieve desired current density and increase process stability. In a method of US 5,369,239 A external sensing elements are used to determine the spark location on corners / edges to control build-up of graphite resulting in undercut during machining.

As mentioned, typically the tool electrode is prone to wear. Already from US 3,558,842 A it is known that a protective film forms on the tool electrode under specific conditions in an electric discharge machining process. The protective film is formed, e.g. by products of the working liquid and/or by products resulting from the discharge across the machining gap.

The formation of a protective film can be used to protect the tool electrode and to thereby reduce wear of it. For instance, the article "Zero wear - The "Perpetuum Mobile" of die-sinking EDM", downloadable on http://www.gfac.com/fileadmin/user_upload/dev-agiecharmilles/News/Result_today_4/Results today_04_E_article11.pdf, describes on page 28 an electric discharge machining where a graphite electrode is used in die-sinking EDM. Graphite does not melt, but it sublimes. According to this document, as soon as the EDM process begins, the material removed wanders with the decomposition products from the carbon content dielectric to the graphite electrode. By controlling the reduction in temperature during the process, carbon precipitates on the electrode surface. Thereby a layer is formed on the electrode which protects the original electrode. The EDM process is such controlled that the growth of the layer on the electrode and the wear caused by discharge impulses taking place on the protective layer is in balance. Thus, the wear of the electrode can be reduced.

However, in particular, in the case of meso- and micro-machining, i.e. for example in the meso-scale (electrode surface area 10 mm² to 1 mm²) and in the micro-scale (electrode surface area between 1 mm² to 0.001 mm² or smaller dimensions on the electrode below 1 mm), the electrode wear is also with the above-mentioned machining processes considerable.

Furthermore, from J. Valentinčič, M. Junkar, "On-line selection of rough machining parameters", Journal of Materials Processing Technology 149, 2004, pp 256-262, it is known that the discharge voltage depends on the eroding surface size. From J. Valentinčič, M. Junkar "A model for detection of the eroding surface based on discharge parameters", Machine Tools & Manufacture, 44, 2004, 175-181, it is known that the electric current signal depends on the size of the eroding surface. From J. Valentinčič, et al., "Selection of optimal EDM machining parameters for the given machining surface", 8th International Conference on management of Innovative Technologies MIT, 2005, pp. 217-225, an on-line selection of the machining parameters according to the given machining surface is known.

Furthermore, it is known to estimate from discharge plasma physics the state of discharge channel. For example, US 4,376,880 A mentions to distinguish between normal discharges and unwanted discharges on the basis of the discharge plasma state.

From P. Boddy, T. Utsumi, "Fluctuation of arc potential caused by metal-vapor diffusion in arcs in air". Journal of Applied Physics vol. 42 no. 9, 1971, pp 3369-3373, it is known that the discharge voltage indicates different states of plasma during electrical contact opening in air, a phenomena similar to that occurring for discharges in liquid dielectrics.

Thus, it is an object of the present invention to provide an improved method for controlling an EDM process and an improved electric discharge machining apparatus.

### Summary of the Invention

According to a first aspect, the invention provides a method of controlling an electric discharge machining apparatus having at least a tool electrode and a workpiece, according to claim 1.

According to a second aspect, the invention provides an electric discharge machining apparatus, comprising: a tool electrode, a working table for receiving a workpiece, an impulse generator for generating discharge impulses, and a control for controlling the electric discharge machining apparatus, wherein the control is adapted for performing the method of the first aspect.

Further aspects of the invention are set forth in the dependent claims, the following description and the drawings.

### Brief Description of the Drawings

Embodiments of the present invention are explained by way of example with respect to the accompanying drawings, in which:
Figs. 1a to d illustrate the determination of an instantaneous eroding surface area of a tool electrode;
Fig. 2 shows an embodiment of a die-sinking discharge machining apparatus in accordance with the present invention;
Fig. 3 shows a discharge impulse technology which is applied in the case that the discharge occurs at a macro-scale surface of a composite electrode of Fig. 1c;
Fig. 4 illustrates a flow chart of an embodiment of method of controlling the EDM apparatus of Fig. 2;
Figs. 5a and b show a discharge voltage measurement method;
Fig. 6 illustrates the measurement of discharge voltages for at least two distinct instantaneous surface areas, the result of which is input in some embodiments of the invention for adapting at least two different process technologies during erosion;
Fig. 7a illustrates the adaptation of process technology for the current electric discharge after discharge voltage measurement;
Fig. 7b illustrates the adaptation of process technology for the current and/or subsequent discharge(s), based on discharge voltage measurement;
Fig. 7c illustrates the adaptation of process technology where a specific impulse train is applied to the machining gap during and/or after the discharge voltage measurement illustrated in Fig. 6;
Fig. 7d shows arc control measures in addition or simultaneously with discharge voltage measurement for the process control adaptation;
Fig. 8 illustrates an embodiment with a tool electrode having a single surface area, where at least two distinct discharge voltages are measured during machining leading to appropriate technology adaptation;
Fig. 9 shows different discharge voltage groups for type of sparks and information of instantaneous surface area for given spark;
Fig. 10 illustrates embodiments of different configurations of tool electrodes;
Figs. 11a to 11d show different embodiments of impulse trains for discharge impulse patterns in accordance with the present invention, which are applied in the case that the discharge occurs at the small structure of the composite electrode illustrated in Fig. 1c;
Figs. 12a and 12b show a long discharge impulse and a short discharge impulse, respectively, with an increasing slope section;
Fig. 13a and b illustrate different types of discharge plasma states and the corresponding mean discharge voltage along with the associated evolution possibilities with time;
Fig. 14 shows discharge voltage measurements for different discharge plasma phases during opening of electrical contacts;
Fig. 15a illustrates three distinct discharge voltages of a spark during ED-machining;
Fig. 15b illustrates an example of unstable spark generation; and
Fig. 16 shows an embodiment wherein pilot/scout pulses are applied during erosion to determine the instantaneous surface area on which electrical discharges are occurring.

### Detailed Description of Embodiments

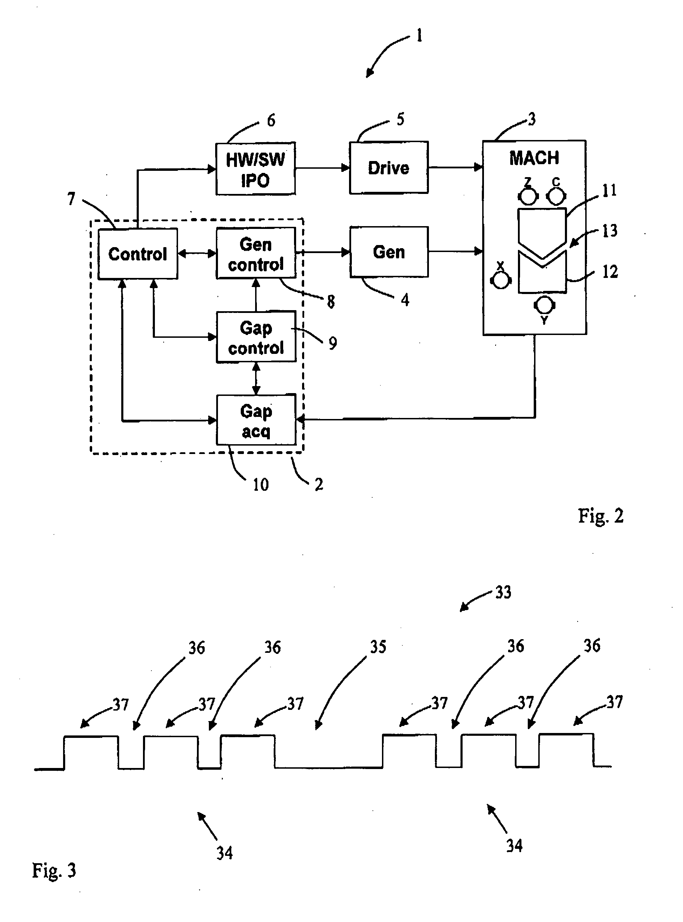

Fig. 2 illustrates an embodiment of a die-sinking electric discharge machining apparatus 1 in accordance with the present invention. Before proceeding further with the detailed description of Fig. 2, however, a few general items will be discussed.

As already mentioned in the beginning, in electrical discharge machining, electric energy is applied in the form of discrete electrical impulses across a machining gap filled with a machining fluid (e.g. air, gases) or liquid dielectric (e.g. dielectric oil, distilled water). The discrete electrical impulses (also referred to as "electrical pulses" or "pulses" in the following) cause a succession of electrical discharges between a tool electrode and a workpiece. The space between the tool electrode and the workpiece defines the machining gap, also referred to as working gap hereinafter. The electrical discharges lead to a material removal from the workpiece and, additionally, to wear of the tool electrode.

Typically, as material removal proceeds the tool electrode is advanced relatively to the workpiece by servo feed means. The machining gap distance is continuously controlled according to the instantaneous process conditions. A signal representing the current working gap distance (e.g. the ignition delay and/or mean gap voltage) is compared with a value representing a desired working gap distance (reference value) and the resulting error between these values Is computed to generate a new command value for the drive motor in order to adjust the correct working gap distance. In this way the control of the relative position of workpiece and electrode allows the creation of consecutive material-removal discharges.

The material-removal and the discharges lead to a contamination of the machining gap region with erosion debris, process byproducts, thermal decomposition products of the dielectric and gases. It is known to remove such contaminations by flushing the machining gap region with fresh machining fluid and by cyclically retracting the tool electrode away from the workpiece.

In some embodiments, for a machining cycle various process technology parameters are defined within one set of process technology parameters. The process technology parameters can be mainly grouped in some embodiments into electrical parameters and time parameters for fixed conditions of material parameters. Electrical parameters of process technology include pulse type (initial current, final current, path taken for rise of current), applied open voltage, current spikes, etc. Time parameters include pulse duration, pause duration, specific impulse trains, time interval between two flushing cycles, etc. The process parameters based on electrode type, materials, dielectric, machine type, etc. are optimised to achieve optimal process outputs. Process outputs mainly include material removal rate, tool electrode wear, surface quality, form precision and accuracy, resource requirements, etc.

From US 4,288,675 A, mentioned in the outset, it is known to use (discharge) impulse trains which each consist of multiple machining impulses and to vary the duration and/or the off-time of consecutive impulse trains to reduce electrode wear. The impulse duration of each single pulse and the off-time between each single impulse of the impulse train are preset before machining and depend, e.g. on the electrode materials. The duration or on-time of an impulse train and/or the off-time between consecutive impulse trains is adjusted during machining in accordance with a detected rate or relative advance movement of the tool electrode so as to maintain the current density along machining surfaces substantially constant in spite of change in the instantaneous machining area (see below) during relative advance movement of the tool electrode. This document does neither refer to the meso- nor to the micro-scale machining, and, more general, it does not refer to the spark location detection and an associated process technology adaptation.

From US 4,503,309 it is known to use increased current pulses intermittently in an impulse train in order to achieve desired current density and increase process stability. In a method of US 5,369,239 A external sensing elements are used to determine the spark location on corners/edges to control build-up of graphite resulting in undercut during machining.

As mentioned, typically the tool electrode is prone to wear. Already from US 3,558,842 A it is known that a protective film forms on the tool electrode under specific conditions in an electric discharge machining process. The protective film is formed, e.g. by products of the working liquid and/or by products resulting from the discharge across the machining gap.

Also in electric discharge physics carbon deposition on electrode surfaces has been observed, especially for temperature reaching above 1400°C when pyrolysis of carbon begins. Depending on the temperature and pressure carbon builds up from decomposition products through pyrolysis.

The formation of a protective film can be used to protect the tool electrode and to thereby reduce wear of it. For instance, the article "Zero wear - The "Perpetuum Mobile" of die-sinking EDM", mentioned in the outset, describes an electric discharge machining where a graphite electrode is used in die-sinking EDM.

In this known method impulse trains may be used, which consist of, for example, three identical discharge impulses having the same impulse duration and the same off-time between them. The off-time between the impulse trains according to this method is larger than the off-time between the single discharge impulses of a single impulse train.

Moreover, with this method it is not possible to apply a high discharge current, e.g. above 8 A, for composite electrodes (electrode having multiple different structures, e.g. in the meso- and micro-scale), without causing a high wear on the tool electrode. Hence, with the above methods, the overall machining rate is small.

Graphite does not melt, but it sublimes. During the electrical discharge, carbon is formed in form of graphite on the electrode surface(s). The formed graphite type depends on the temperatures involved in the process and current control during electrical discharges. The deposited carbon on the electrode surface (anode and/or cathode) may also contain erosion products or debris formed during and at the end of the discharge. Thereby a layer is formed on the electrode from graphite and erosion products including dielectric decomposition products which protect the original electrode. The EDM process is such controlled in some embodiments that the growth of the layer on the electrode and the wear caused by discharge impulses taking place on the protective layer is in balance. Thus, the wear of the electrode can be reduced. The process can be seen at multiscale:

| | |
|---|---|
| at microsecond level | - plasma reaction kinetics, |
| at single spark level | - change in temperature and pressure over time duration after breakdown, |
| at multiple sparks level | - average current density (duty factor) and impulse train formation, and |
| at hundreds of milliseconds level | - time interval between two flushing cycles. |
| at much larger time level | - depth of erosion and contamination in the gap region. |

In some embodiments, the growth of carbon on the tool electrode can be mainly characterized as lateral growth and frontal growth in dependence on the direction of motion of the tool electrode during erosion. By controlling the current applied to electrical discharge over the machining gap, also referred to as "spark" in the following, during initial few microseconds (1-30µs) of the spark, a high initial temperature on the electrode surfaces can be reduced whereas the rest of the pulse duration increases the surface temperatures of the electrode which lead to carbon formation on the electrode surface(s).

As mentioned earlier, at temperatures above 1400°C pyrolysis of carbon begins which may be a primary factor for the protection layer formation on electrodes surface(s) containing graphite and erosion products. The formed layer may be porous or it can be even harder than the base material of the tool electrode, thereby protecting it against thermal and/or abrasive forces causing typically wear of the tool electrode. In some embodiments the average temperature of the tool electrode surface and the discharge region is controlled by controlling a duty factor or an average current density, whereby the volume of the carbon build-up on the graphite electrode can be controlled.

In some embodiments, the current level per spark can be regulated with three main parameters: initial current (0.01-25 A), final current (0.1-120 A) and the path between them, i.e. different slopes or gradients in current rise. Thus, the rate at which the carbon builds up is based on all these effects including anode/cathode material properties, such as specific heat, thermal conductivity and electrical resistivity. In some embodiments, the profile of the current rise per spark, the current slope and the initial current can reduce the wear of the tool electrode and can increase the radial growth of the carbon protection layer on the tool electrode surface. Also, the geometric scale effect of electrode dimension plays role in carbon growth rate and the characteristics of the carbon build up.

Although, only the thermal aspect is mentioned here, in some embodiments the nature of carbon growth may also be attributed to other aspects such as electro-magnetic field, physical - chemical vapour deposition, cathode/anode spot generation, high current density (0.1-20 A or higher) over time and or surface area, etc.

However, in some embodiments, in particular where the electrical discharge takes place on the corner and edges of the tool electrode and in the meso- and micro-machining, i.e. for example in the meso-scale (instantaneous electrode surface area 10 mm² to 1 mm²) and in the micro-scale (instantaneous electrode surface area between 1 mm² to 0.001 mm² or smaller and/or dimensions on and/or of the electrode below 1 mm), the electrode wear is also with the above-mentioned machining processes considerable.

In some embodiments, the instantaneous electrode surface is defined as the projection surface area of the electrode surface over which an electrical discharge, i.e. a spark, is occurring. The size dimension of the electrode refers in some embodiments, to structures or parts of the electrode which have a defined dimension, such as ribs or the like, where the thickness of each rib is below, e.g. 1 mm, irrespective of the length and width of the ribs.

Furthermore, as mentioned in the outset, from J. Valentinčič, M. Junkar, "On-line selection of rough machining parameters", Journal of Materials Processing Technology 149, 2004, pp 256-262, it is known that the discharge voltage depends on the eroding surface size and from J. Valentinčič, M. Junkar "A model for detection of the eroding surface based on discharge parameters", Machine Tools & Manufacture, 44, 2004, 175-181, it is known that the electric current signal depends on the size of the eroding surface.

Additionally, from J. Valentinčič, et al., "Selection of optimal EDM machining parameters for the given machining surface", 8th International Conference on management of Innovative Technologies MIT, 2005, pp. 217-225, an on-line selection of the machining parameters according to the given machining surface or eroding surface size of the tool electrode is known.

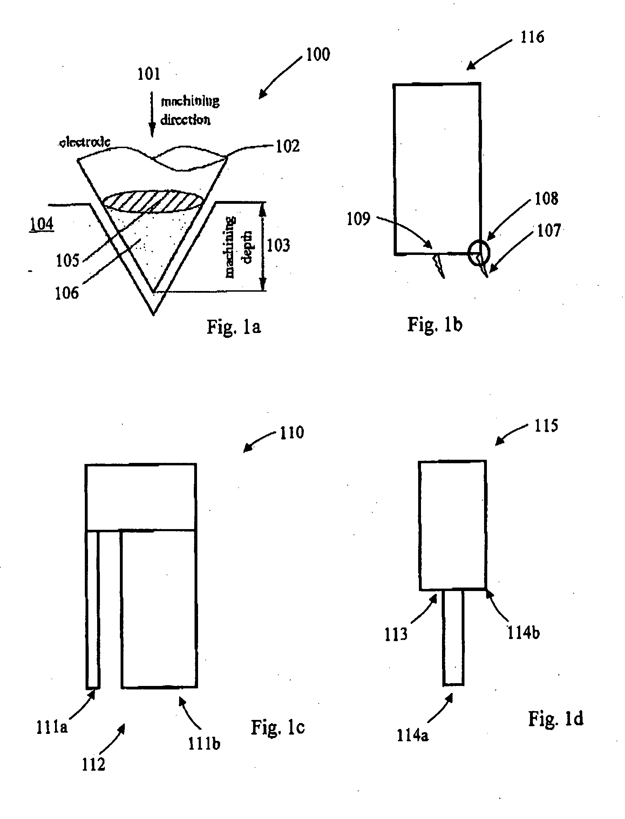

As shown in Fig. 1a, an eroding surface size 105 of a tool electrode 102 can be defined as a projection of the machining surface 106, i.e, the surface between a workpiece 104 and the tool electrode 102, to the plane perpendicular to the machining direction 101 of the tool electrode 102.

Thus, the "eroding surface size" of this document is different from the "instantaneous eroding surface size", since the instantaneous eroding surface size only refers to structure of the electrode where a current (instantaneous) electrical discharge takes place, i.e. where a spark is currently occurring.

The "eroding surface size" of Valentinčič et al. only consider the total theoretical surface where sparks can occur. In other words, Valentinčič does not recognize cases where the spark e.g. occurs on a specific structure on the tool electrode, such as a corner, edge, rib or the like, which is different in its dimension type from other structures, such as plain surface area, ribs with larger dimensions, or the like.

The tool electrode used in this publication Valentinčič et al. have a conical shape (Fig. 1a). During machining with this conical tool electrode the eroding surface size becomes larger. In order to on-line optimize machining parameters, the percentage of short-circuit discharges is monitored, In the case that the minimum percentage of short-circuits exceeds a critical value a set of machining parameters with a lower power is selected. If the minimal percentage of short-circuits does not exceed the critical value, the power in the gap is either optimal or even too small to attain the highest material removal rate.

In order to recognize that the eroding surface size has become larger, average discharge voltage values are calculated. Thus, Valentinčič et al. consider multiple discharge voltage values for multiple electrical discharges which take place on different locations on the tool electrode. Hence, Valentinčič et al. are not able to discover electrical discharge (spark) occurring at a specific location on the tool electrode.

The inventor recognized that the wear of the tool electrode, especially of corners/edges, and the wear of composite electrodes with macro- and/or meso- and/or micro-structures can be considerably reduced and the material removal rate can be improved, by analyzing the discharge voltage/current, which is indicative of the current spark location, and by adapting process technology parameters correspondingly on the basis of the determined instantaneous eroding surface area. Thus, the inventor also recognized that the instantaneous eroding surface area and the associated location of a current spark discharge can be determined by analyzing its discharge voltage and/or current during the machining.

As discussed, the discharge voltage is indicative of a type of a dimension of the instantaneous eroding surface area of the tool electrode and/or spark location, and, thus by analyzing the discharge voltage applied to the machining gap, conclusions regarding the type of dimension of the instantaneous eroding surface area of the tool electrode can be drawn.

The instantaneous eroding surface size can be defined or determined in some embodiments, as mentioned above, as a projection of the machining surface, i.e. the surface between the workpiece and the electrode, to the plane perpendicular to the machining direction, where a current electrical discharge takes place, and, thus a spark is located.

In some embodiments only an "immediate" surrounding electrode area where discharge is taking place is considered as instantaneous eroding surface area. As illustrated in Fig. 1b, in these embodiments the instantaneous eroding surface area is such defined that sparks on corners and/or edges 107 of a tool electrode 116 occur on an instantaneous eroding surface area 108 which is smaller than the instantaneous eroding surface area 109 for sparks occurring on the place surface - although the projection area of the tool electrode 116 at the given perpendicular plane 109 , i.e. the eroding surface area according to Valentinčič discussed above, is larger, as shown in fig. 1b.

In this way, in some embodiments, even for a variety of tool electrode configurations, the instantaneous eroding surface area for a given spark may be considered in the way mentioned above.

Fig 1c illustrates a composite tool electrode 116 with different instantaneous surface areas 111a and 111b which have different dimensions, and, thus, cause at least two different sparks, which differ in their associated (measured) discharge voltage/current information. Fig. 1d illustrates another tool electrode 115 with a single type structure. For this tool electrode 115 only two different discharge voltage/current values are obtained, when the electrical discharge occurs on the larger surface 113 and on the smaller surface 114a. Moreover, electrical discharges occurring on a corner 114b of the tool electrode 115 can also determined by analyzing the associated discharge voltage and/or current, as discussed above, although the projection area for these different structures 113, 114a and 114b will be the same.

As mentioned, the underlying physical basis for the above consideration is that the (measured) discharge voltage value and/or discharge current value of each electrical discharge, i.e. spark, depends on the instantaneous eroding surface area at which it is occurring. Thus, there is an association between the instantaneous eroding surface area and the discharge voltage and/or current of the electrical discharge currently taking place within the instantaneous eroding surface area.

In some embodiments, the discharge voltage of electric discharge may also be indicative of state of discharge plasma e.g. metal phase plasma or gas phase plasma. In addition, it can be presumed that the plasma states for different instantaneous areas and also for corners and edges may be slightly different, and, thus different discharge voltage values result according to instantaneous area or spark location on corners or edges of electrodes. Another aspect includes the gap distance between the electrode and workpiece which may also affect the discharge voltage values for sparks on different instantaneous areas or on corners or edges where due to a different local electric field strength, the changing spark length changes the resistivity of the associated plasma channel and ultimately changes the measured discharge voltage of the spark.

in some embodiments, the discharge voltage information can also be used indirectly using discharge current values which will fluctuate and also indicate the same information of instantaneous eroding surface area and/or spark location on corners or edges, if resistor type pulses are used instead of transistor type pulses. A resistor/transistor pulse is a pulse generated by a resistor/transistor source. The difference lies in the current generator control, where transistor pulses maintain constant current across gap irrespective of discharge voltage value of spark. On the other hand, resistor pulses use constant or variable resistor which maintains the desired current across gap but may vary with change in discharge voltage of spark according to ohm's law. In some embodiments, a further consideration can be based on the available channel radius for given current during discharge to be supplied to plasma channel through electrode. For example, sparks on corners or edges 107 (Fig. 1b) have a much smaller available volume 108 for current supply within the tool electrode 116 compared to sparks on the large instantaneous eroding surface area 109. Another explanation may be the available dielectric in the surrounding of the plasma channel of the spark. For spark breakdown on a small instantaneous surface area, such as micro-scale area, a corner or an edge, the plasma may be largely formed with metal vapour compared to gas vapour phase. On the other hand, sparks occurring on a large instantaneous surface area may compose higher gas vapour formed from surrounding dielectric compared to metal vapour in its plasma channel. Different phases of plasma show different discharge voltages and, thus, help detecting an instantaneous surface area of the spark occurring in real time.

Some embodiments refer to a method of controlling an electric discharge machining apparatus. The apparatus has at least a tool electrode and a workpiece. The method comprises positioning of the tool electrode relative to the workpiece. Thereby, a machining gap is defined between the tool electrode and the workpiece. Across the machining gap a discharge is applied in order to initiate an electric discharge between the tool electrode and the workpiece.

At next method step at least one discharge impulse is generated which is applied to the machining gap and which generates an electric discharge across the machining gap. The resulting electric discharge voltage across the machining gap is analysed. The analysis is performed for the current electric discharge which is generated by the application of the at least one discharge impulse. Thus, by analyzing the discharge voltage/current for the current (instantaneous) electric discharge, the analysis is indicative of the instantaneous eroding surface area where the current electric discharge takes place, i.e. the instantaneous eroding surface area where the current spark origins. Based on this analysis of the discharge voltage across the machining gap generated by the applied discharge impulse(s), a type of dimension of an instantaneous eroding surface area of the tool electrode on which the discharge is generated is determined. As discussed, the discharge voltage is indicative of the dimension of the instantaneous eroding surface area, which is associated with the location on the tool electrode where the electrical discharge occurs, and which is also defined by the tool electrode structure. Thus, in this step it is determined, for example, that the instantaneous eroding surface area has a dimension which is within the macro- or meso- or micro-scale, or that the instantaneous eroding surface area is on a corner or edge of the tool electrode. In some embodiments, the instantaneous eroding surface area dimension type is defined by given dimension ranges, e.g. a meso-dimensions type is determined when the eroding surface size is in a range between 10 mm² and 1 mm², etc., as discussed above.

As discussed above, the inventor recognized that the electrode wear can be considerably decreased and that the material removal rate increased when a corresponding process technology is applied to a corresponding type of dimension of an instantaneous eroding surface area of the tool electrode. A process technology, as mentioned, is defined by a set of process technology parameters (see above). Moreover, the inventor recognized that the machining time for specific types of dimensions of eroding surfaces areas, such as dimensions in the meso- and the micro-scale, can be improved by applying correspondingly optimized discharge impulse patterns for the corresponding dimension type. Additionally, in some embodiments, also machining parameters of the process technology parameters, such as occurrence of jump motions, discharge current, discharge duration, electrode polarity, etc., i.e. electrical and time parameters of the EDM process technology are adapted based on the determined instantaneous eroding surface area dimension.

In some embodiments, the tool electrode comprises at least two instantaneous eroding surface areas having different dimensions. For instance, the tool electrode is a composite electrode having different structures with different types of dimensions, such as a meso-scale structure and a micro-scale structure, which correspond in accordance with the above definition of the eroding surface, to different instantaneous eroding surface sizes, i.e. for a spark on either of the structure of the tool electrode, a specific instantaneous eroding surface size can be derived with the above definition. For instance, based on the discharge voltage information the meso-scale structure is associated with a meso-scale instantaneous eroding surface size and the micro-scale structure is associated with a micro-scale instantaneous eroding surface size, since a given impulse discharge may only occur at only one of the two different surfaces at a given time. For instance, a first electric discharge (spark) is located on the meso-scale structure of the tool electrode, and, thus, the measured discharge voltage/current corresponds to a meso-scale instantaneous eroding surface area. A second electric discharge is, for example, on the micro-scale instantaneous eroding surface area, and, thus, the measured discharge voltage/current corresponds to a micro-scale instantaneous eroding surface area.

If one applies, e.g. process technology with a set of process technology parameters optimized for meso-scale structures on such a composite tool electrode, the micro-scale structures of the composite electrode will be subject to heavy wear. On the other hand, if one applies a set of process technology parameters which is optimized for micro-scale structures on the composite tool electrode, for example, the machining time will be longer than for the meso-scale optimized a set of process technology parameters. The same applies in the case that e.g. a tool electrode with meso-scale structures is used for a first type machining cycle and, e.g. another tool electrode with micro-scale structure is used for a second type machining cycle following or before the first type machining cycle. If one applies only one set of process technology parameters for both tool electrodes, the micro-structure will be subject to heavy wear in the case of a set of process technology parameters optimized for the meso-structure or the overall machining time for the meso-structure tool will be longer in the case of a set of process technology parameters optimized for the micro-structure.

As mentioned, the set of process technology parameters comprises in some embodiments at least one specific impulse pattern, and/or other electrical and time parameters of (dimension) optimized process technology parameters, as mentioned above. Generally, the sets of process technology parameters may differ for two process technologies optimized and adapted for two different instantaneous eroding surface areas.

Thus, in some embodiments, for each detected instantaneous eroding surface dimension type, such as macro- or meso- or micro-dimension type, a respective discharge process technology and a respective set of process technology parameters, respectively, is applied which is optimized for the respective detected instantaneous eroding surface dimension type.

Such a predefined, respectively optimized set of discharge process technology parameters, such as an impulse pattern, is determined on the basis of the determined dimension type of the instantaneous eroding surface area of the tool electrode, Respective discharge(s) are generated in accordance with the determined set of process technology parameters, such as a discharge impulse pattern, and are applied across the machining gap. Hence, in some embodiments where, e.g. composite electrodes with different structures according to different dimension types are used, the corresponding discharge impulse patterns or optimised set of process technology parameters are applied to the associated dimension type surface area of the electrode. For example, a set of process technology parameters (e.g. discharge impulse pattern) optimized for a meso-scale structure of the composite electrode is applied when it is determined that the discharge voltage of given spark is indicative of a meso-scale dimension type. Similarly, a micro-scale optimized set of process technology parameters is applied in the case that discharge voltage of spark is indicative of an instantaneous micro-scale structure of the composite electrode. Hence, in some embodiments, for each type of dimension of a structure an associated set of process technology parameters is applied across the machining gap, thereby reducing wear, in particular, of meso-, micro-structures, corners and edges of the tool electrode and simultaneously increasing the overall machining rate.

Although the description mainly refers to composite tool electrodes having at least two different eroding surface area dimension types, the present invention is also applicable to tool electrodes which only have a single eroding surface area dimension type. For instance, in some embodiments a tool electrode with a meso-scale structure is used and, e.g. for another machining process this meso-scale structure tool electrode is exchanged by another tool electrode having only a micro-scale structure, or it is exchanged by a composite electrode with structures of different dimension type. Moreover, in some embodiments, a tool electrode is used which has a shape continuously varying the eroding surface, e.g. a conical shape. Also in such embodiments, the instantaneous eroding surface area dimension type is determined, such as explained above. In same way, also sparks occurring on corner or edges of meso- or macro-scale instantaneous surface area of electrode may be recognized based on their discharge voltage/current information and a respective set of process technology parameters can be adapted to adjust a desired current density on the corner or on edge sparks while keeping the required current density for sparks occurring on larger surface areas at a required value, which are in turn determined based on the spark discharge voltage/current information.

The corresponding set of process technology parameters, defining for example a discharge impulse pattern, are predefined in some embodiments and, e.g. stored in a memory of the electric discharge machining apparatus. Different set of process technology parameters representing different process technologies can be optimized for machining of different dimension types of instantaneous eroding surface areas and can be pre-stored in some embodiments. Such sets of process technology parameters can be obtained, for example, by optimizing the tool electrode wear and the machining time in an experimental setup by varying typical electrical and/or time parameters of discharges. Typical parameters which are optimized for the set of process technology parameters, for example representing predefined discharge impulse patterns, are l.a. the applied discharge current/voltage, the discharge impulse duration and the pauses between single discharge impulses and/or groups of discharge impulses (which are also referred to as discharge impulse trains), polarity of pulses, pulse type (initial current, final current, path for rise of current), current peaks at defined duration during the discharge.

In some embodiments, the dimension type is defined by a specific, e.g. predefined, dimension range, e.g. 10 mm² to 1 mm² for a meso-scale dimension type, e.g. 1 mm² to 0.1 mm² or below for a micro-scale dimension type whereas above 10 mm² for macro-scale dimension type. In some embodiments, the dimension type and the associated value range is user-defined as well as the associated set(s) of process technology parameters which is optimized for such a dimension type.

In some embodiments, a first set of process technology parameters is determined when the determined dimension type of the instantaneous eroding surface area is of a first type, and a second set of process technology parameters is determined when the determined dimension type of the eroding surface area is of a second type. The first and the second set of process technology parameters are different from each other and the first and second dimension types of the instantaneous eroding surface areas are also different from each other. Thus, in such embodiments it is possible that for each kind of detected instantaneous eroding surface area a specific set of process technology parameters is determined which is optimized for that respective instantaneous eroding surface area dimension type.

As mentioned, in some embodiments, the tool electrode, such as a composite tool electrode, comprises at least two instantaneous eroding surface areas having different dimensions types and/or the tool electrode comprises at least two instantaneous eroding surface areas causing an electric discharge with at least two distinct discharge voltage/current values. In some embodiments, this is also true for tool electrodes having a single projection area, but the electric discharges, i.e. the sparks, can also occur at different instantaneous surface eroding areas, such as at a plane surface area, a corner or an edge of the tool electrode.

Thus in some embodiments, the instantaneous eroding surface area is at least one of: a corner, an edge, a lateral face, or a frontal face of the electrode.

In some embodiments, also the number of instantaneous eroding surface areas having different dimension types is determined on the basis of the discharge voltage and/or discharge current analysis. This is performed, for example, by analyzing the history of detected instantaneous eroding surface areas.

As mentioned, in some embodiments the first and/or second set of process technology parameters defines a discharge impulse pattern. A discharge impulse pattern comprises at least one first type discharge impulse and at least one second type discharge impulse. The first type discharge impulse has a longer impulse duration than the impulse duration of the single second type discharge impulse. The first type discharge impulse causes the formation of a protective film against wear on the tool electrode and the second type discharge impulse causes erosion at least on the tool electrode. In some embodiments, the impulse pattern includes groups of discharge impulses which are consecutively in time and interrupted by impulse pauses. A group of discharge impulses comprises a predefined number of discharge impulses and forms in some embodiments a so-called impulse train. In some embodiments, a discharge pattern for a meso-scale dimension type or macro-scale comprises a group with discharge impulses having the same parameters, such as discharge impulse current, discharge impulse duration and impulse pause duration between the single discharge impulses of the group. In some embodiments, an impulse pause is present between two consecutive groups of discharge impulses referred to as impulse train. This impulse train pause between the groups has a duration which is usually larger than the duration of the impulse pauses used between the discharge impulses within the impulse train. In the case of meso-structures such a discharge impulse pattern provides a high erosion rate during application of the impulse train and a machining gap recovery between the impulse pauses between the impulse trains, while the tool electrode wear is low.

In some embodiments, a first predefined discharge impulse pattern is determined when the determined dimension type of the instantaneous eroding surface area is of a first type, e.g. meso-scale dimension type, and a second predefined discharge impulse pattern is determined when the determined dimension type of the instantaneous eroding surface area is of a second type, e.g. micro-scale dimension type. The first and the second predefined process technology or discharge impulse patterns are different from each other and the first and second dimension types of the instantaneous eroding surface areas are different from each other. In this case, for example, the first predefined discharge impulse pattern is optimized for machining of a meso-scale structure of the tool electrode and the second predefined discharge impulse pattern is optimized for machining of a micro-scale structure of the tool electrode.

In some embodiments, a first dimension type is indicative of a structure of the tool electrode being smaller than or equal to 1 mm² (micro-scale) and a second dimension type is indicative of a structure of the electrode being larger than 1 mm² (meso- or macro-scale). In some embodiments, at least one set of predefined process technology parameters, defining e.g. a discharge impulse pattern, is optimized for an instantaneous eroding surface area of the tool electrode which is smaller than or equal to 1 mm² (meso-scale) and at least one second set of predefined process technology parameters, defining e.g. a second type of discharge impulse pattern, is optimized for an instantaneous eroding surface area of the tool electrode which is larger than 1 mm² (meso- or macro-scale).

In some embodiments, at least two different process technologies represented by two different sets of process technology parameters are used during a single machining cycle. They are applied based on at least two different detected discharge voltage or current value(s) measured, for example, after breakdown of the spark of the current electric discharge, indicating its instantaneous eroding surface area, where the current spark is located, under given process conditions, such as electrode - workpiece materials, dielectric, maximum current per spark, pulse duration, etc.

In some embodiments, a first discharge voltage and/or current value is indicative of a spark occurring on the corner or edge of the tool electrode. The tool electrode may have e.g. meso-scale or macro-scale dimensions. However if at least two different sparks can be characterised based on their discharge voltage information for given machining cycle, a corresponding process technology and, thus, a corresponding set of process technology parameters can be adapted for the determined instantaneous eroding surface area. Thus, at least two different process technology types can be observed during single machining cycle in this type of process adaptation in such embodiments. E.g. one of the set of process technology parameters (including pulse duration of instantaneous spark, current of spark, pause duration at termination of spark, parameters for subsequent spark(s), in some cases predefined impulse train, etc.) is optimised for a spark occurring on a corner or edge of the tool electrode, whereas another set of process technology parameters is optimised for larger instantaneous eroding surface area. This results in an overall higher material removal rate, while incurring low or near zero tool wear on both frontal face and corners and edges of the tool electrode. This in turn also reduces resource requirements for subsequent machining steps such as semi-finishing and finishing, if required. Thus, such process adaptation results in higher productivity, improved form precision and accuracy, achieving smallest inner radius with lesser number of electrodes, etc.

In some embodiments, during an erosion cycle, e.g. roughing cycle, structures with different surface areas, especially macro-scale, meso-scale, micro-scale are eroded in various possible configurations. During machining with such tool electrodes, for each spark the discharge voltage and/or current is analyzed and the resulting discharge voltage/current information is procured. Subsequently the process technology is adapted during the same spark or at termination of the spark by determining an appropriate set of process technology parameters.

In some embodiments, a surface roughness to be produced on the workpiece is determined on the basis of the determined eroding surface area dimension type. Thus, in some embodiments it is possible to automatically provide a different roughness on different surface areas of the workpiece with the same tool electrode. For instance, in the case of a composite tool electrode having meso-scale and micro-scale structures, a different roughness can be provided for the meso- and the micro-scale structures to be produced at the workpiece during the same machining cycle. This embodiment can be applied, for example, in Electronic industry to make different roughness within the same machining process. For example, in some embodiments a positioning point, e.g. a hemispherical point, having a finer surface compared to a larger rectangular part can be made within the same machining process. In some embodiments, this concept relies on the detection that the discharge spark is on a specific instantaneous eroding surface area type, such as macro, meso-, or micro-surface area of the tool electrode, as discussed above. On the basis of this determination a corresponding set of process technology parameters, representing e.g. a corresponding discharge impulse pattern, is determined, such that a higher or lower roughness is produced. Thereby, a distinct surface roughness with a single tool electrode can be produced during the erosion process.

The inventor also recognized that, in particular in the above-defined meso- and micro-machining scale and on corners and edges, the wear of the tool electrode can be considerably reduced by introducing a discharge impulse pattern including at least one specific impulse train for meso- and / or micro-machining, where for each impulse train the wear is nearly zero. This is achieved by introducing at least one first type of discharge impulse in each single impulse train, which is configured to form or build-up a protective layer on the tool electrode, and consecutively, at least one second type of discharge impulse, which causes erosion on the protective layer on the tool electrode and on the workpiece, as also discussed above.

The first type of discharge impulse has longer impulse duration than the second type of discharge impulse. In some embodiments the discharge current and/or voltage is identical for the different types of discharge impulses. The definition of these two discharge groups, i.e. first type and second type, is based on pulse duration where the first pulse group with longer pulse duration results in forming a protection layer on the tool electrode and the second pulse group has a pulse duration which causes wear on the tool electrode. By combining at least one first type discharge impulse and at least one second type discharge impulse, an impulse train can be generated which has nearly zero tool wear.

The specific parameters of the first type and second type impulses of the impulse train, such as impulse duration, off-time between single impulses and number of second type discharge impulses, depends on, e.g., the surface structure and/or dimensions of the tool electrode, the electrode-workpiece material, the machining liquid, pulse type, etc.

The impulse train is generated, e.g. by the generator of the EDM apparatus. The impulse train includes at least one first type discharge impulse and at least one second type discharge impulse. In some embodiments, the second type discharge impulses are arranged in any order with respect to the first type discharge impulse, e.g. one single first type discharge impulse comes first in the impulse train and the second type discharge impulse(s) follow after the first type discharge impulse. The spark whose discharge voltage value is measured and used for the process technology parameter adaptation discussed above, may be altered (by electrical and/or time parameters) and can be made part of an adapted impulse train for the determined instantaneous eroding surface area.

The first type discharge impulse mainly causes the generation or formation of a protective film or protective layer against wear on the tool electrode. The protective film can be formed, as discussed above in connection with US 3,558,842 A, by reaction particles of the machining fluid and/or of the tool electrode and/or of the workpiece. In some embodiments, the tool electrode comprises graphite or copper or others. In such embodiments, the first type discharge impulse can form or generate a pyrolytic graphite layer on the tool electrode which may have a higher degree of hardness compared to the "normal" graphite material. In some embodiments, the protective layer is formed in particular in a front region of the tool electrode, where most of the discharges take place.

The second type discharge impulse causes erosion at least on the tool electrode and, additionally, on the workpiece. As the tool electrode is protected by the protection film produced by the single first type discharge impulse of the impulse train, the tool electrode itself is mostly not worn, but only the protective layer which has been formed on it.

In some embodiments, within one impulse train the protective film against wear on the tool electrode generated by the first type discharge impulse is nearly completely eroded by the second type discharge impulses of the impulse train.

The impulse train with the first and second type discharge impulses is applied to the tool electrode such that a corresponding discharge takes place across the machining gap between the tool electrode and the workpiece. Thus, in embodiments where the protective layer produced within one impulse train is eroded within one impulse train, the tool electrode has (nearly) the original shape after application of each impulse train.

Due to this contour accuracy characteristic in some embodiments, also structures in the meso-, micro- or even macro-scale can be machined with high accuracy and form precision. In some embodiments, form conformity reduces the work for subsequent machining and increases productivity while reducing resource requirements, such as number of electrodes, electrode machining, electrode material, electrode setup time.

In some embodiments the ratio of first and second type discharge impulses is kept constant in order to cause a predefined wear on the tool electrode. Thus, the discharge impulse pattern comprising the impulse train with the first type discharge impulse and at least one second type discharge impulse is not determined, but the ratio of the at least two different discharge types (mainly based on pulse duration) is maintained at a specified value within a given tolerance for each detected discharge voltage level. Thereby, a predefined or dynamically determined amount of wear can be achieved, since the first type discharge impulses generated a given amount of protective film on the tool electrode, while the second type discharge impulses cause a given wear on the tool electrode and the protective film on the tool electrode, respectively. The at least two discharge types (classified mainly based on pulse duration) are each generated for a detected discharge voltage level, which in turn is indicative of an instantaneous eroding surface area, where a current spark is located, and a specified value of the ratio between these at least two different discharge types (based on pulse duration) is maintained. Additionally, if machining indicates a separate discharge type based on discharge voltage information of spark, another two discharge types (mainly based on pulse duration) are generated with a ratio between these different discharges types kept at specified value within tolerance. The determined discharge voltage level information may be indicative of the instantaneous eroding surface dimension type and thus differentiating spark instantaneous areas belonging to macro- or meso- or micro-type or on corner or edge.

In some embodiments, at least two different process technologies represented by at least two different sets of process technology parameters are applied during a single machining cycle, wherein one is optimised for macro- or meso-scale features and another is optimised for micro-scale features. These set of process technology parameters define impulse trains or maintain a constant ratio between the at least two different discharge types (based on pulse duration) at each detected distinct discharge voltage level which is indicative of a respective instantaneous eroding surface area. At the same time, other electrical and/or time parameters of respective sets of process technology parameters can also be altered or controlled.

In some embodiments, the above suggested methods are applied to positive polarity discharges, negative polarity discharges or combination of both. In some embodiments, the discharge voltage level for a spark depending on the instantaneous eroding surface area also differs for negative polarity of the tool electrode as well as positive polarity of the tool electrode. The discharge voltage values indicative of an instantaneous eroding surface area of a current spark depend on electrode material, workpiece material, dielectric type, pulse type (initial current, final current, path taken for current rise), polarity of tool electrode, plasma state of discharge for given instantaneous surface area. These values can be pre-stored in a database and compared to during or after measurement of discharge voltage information for each detected spark breakdown during single machining cycle.

In the embodiments, a pilot pulse is applied during machining which has at least one function of detecting the instantaneous eroding surface area at which spark is occurring during the current electric discharge. By analyzing the discharge voltage and/or current of such a pilot impulse discharge, within few microseconds (e.g. 0.1-50 µs) it is possible to apply an optimised set of technology parameters for the instantaneous eroding surface area indicated by the analyzed discharge voltage information of the pilot impulse applied. The pilot impulse can have the same or different properties (e.g. polarity, pulse duration, current per pulse, pulse shape) compared to the impulses which are in accordance with the applied set of process technology parameters which are following the pilot impulse.

In some embodiments, the switching noise for impulses being generated by a linear current source and/or a resistor type generator is reduced in order to decrease discharge voltage value dispersion.

In some embodiments the electric discharge time is reduced in the case that a discharge voltage value above a predefined value is determined. Thereby, damage on the workpiece can be prevented in some embodiments. The predefined voltage value is about 36-40 V in some embodiments.

As discussed above, by determining the instantaneous eroding surface area, the location of the electrical discharge and the associated spark can be determined. Thus, it is possible to determine whether the spark occurs e.g. on a corner, edge lateral face or other characteristic structural part of the tool electrode and to determine an appropriate set of process technology parameters in order to reduce the wear of the tool electrode.

In some embodiments, the discharge impulses being generated in accordance with the determined set of process technology parameters are applied during the current electric discharge and/or during a consecutive electric discharge occurring at the same detected instantaneous eroding surface area and/or at the termination of the current spark. In some embodiments, it is assumed that the next electric discharge associated with the spark occurs on the same instantaneous eroding surface area, and, thus, the set of process technology parameters determined for the current instantaneous eroding surface area can also be used for the next electric discharge.

Some embodiments pertain to an electric discharge machining apparatus, in particular a die-sinking EDM apparatus or drilling EDM apparatus or milling EDM apparatus, which is adapted to perform at least some steps of the control method as described above.

Such an electric discharge machining apparatus comprises parts which are typically known to the skilled person, such as a tool electrode, a working table for receiving a workpiece, an impulse generator for generating discharge impulses, and a control for controlling the electric discharge machining apparatus. The control is adapted for performing the method as described above.

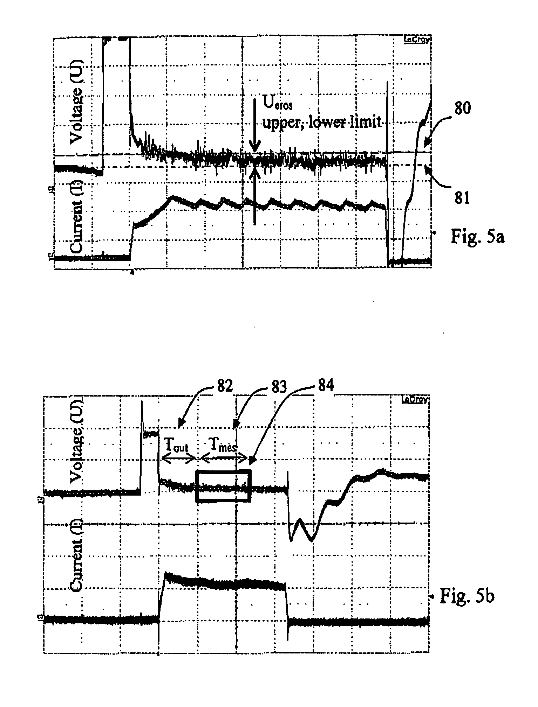

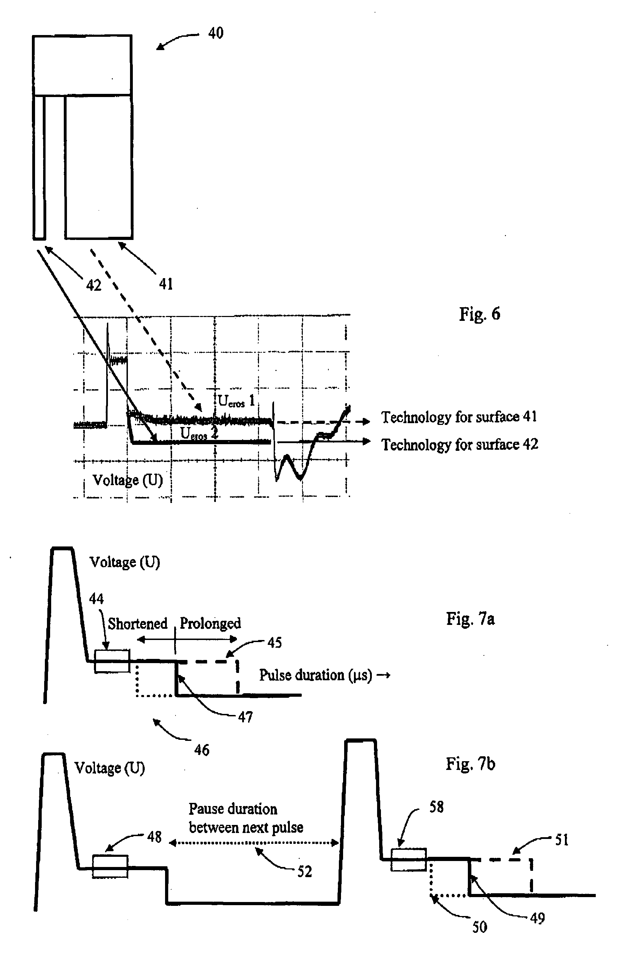

As discussed above, the discharge voltage and/or current is analyzed for a current electric discharge (spark). This requires in some embodiments a fast analysis hardware which is configured to perform such an analysis in real time. Thus, in some embodiments, the measuring of the impulse and the impulse generation is carried out by a dedicated logic circuit, since this has to be performed in real time at single spark level, thus, this has to be performed at microseconds level. The logic used in such embodiments implements, for example, discharge voltage measuring windows (such as measuring window Tₘₑₛ (83), see description for Fig. 5b below), a precisely placed time out after a breakdown of the spark (see Tₒᵤₜ (82), Fig. 5b and associated description) and it generates process technology parameter adaption, such as described in connection with Figs. 7a-7c below. In some embodiments the respective logic is closely related and embedded in an oscillator and measuring circuit of the EDM apparatus. Such a logic cannot be programmed with software in some embodiments, since the reaction time in the milliseconds level would be too long for typical programmable microprocessors. In some embodiments, the circuit is realized in a field programmable gate array (FPGA) programmed with VHDL or with a similar hardware description logic.

Returning to Fig. 2, there Is illustrated a die-sinking electric discharge machining (EDM) apparatus 1 in accordance with the present invention. The general structure of a die-sinking electric discharge machining apparatus is also known to the skilled person.

The die-sinking EDM 1 has a control block 2 for performing the electric discharge machining process described above. The control block 2 has a general control module 7, a generator control module 8 for controlling an impulse generator 4, a machining gap control module 9 for controlling a machining gap 13 between a tool electrode 11 and a workpiece 12, and a gap acquisition module 10 for receiving machining gap related data during the machining process.

The tool electrode 11 and the workpiece 12 are located in a machining block 3. The positioning of the tool electrode 11 relative to the workpiece 12 is performed over an interpolator module 6 and a drive module 5 which drives positioning members, such as servo-feeds, in the c, x, y and z-direction as indicated in the machining block 3 of Fig. 1. The tool electrode 11 is made of graphite. In other embodiments, the tool electrode can be made of other electrically conductive materials. The workpiece 12 in this embodiment is made of metal. In other embodiments the workpiece 12 can be made of another electrically conductive material, such as steel or ceramics.

Fig. 1c, as also discussed above, illustrates a composite tool electrode 110, which is used in one embodiment in the EDM apparatus of Fig. 2. The composite tool electrode 110 has an electrode surface 112 with two different surface structures 111a, 111b, a smaller structure 111a and a larger structure 111b, which are of a different type of dimension, as discussed above. The smaller structure 111a has a surface size which is within the micro-scale and is exemplary about 0.5 mm². The larger structure 111b has a larger surface size which is exemplary about 3 mm² and is of the meso-scale type. As the smaller structure 111a and the larger structure 111b have a cylindrical form, the surface sizes are identical to the respective eroding surface sizes defined above. Thus, the smaller structure 111a is associated with an instantaneous eroding surface are which is of the micro-scale dimension type (surface area smaller than 1 mm² or having a dimension below 1 mm), and the larger structure 111b is associated with an instantaneous eroding surface area which is of the meso-scale dimension type (surface area between 10 mm² and 1 mm²).

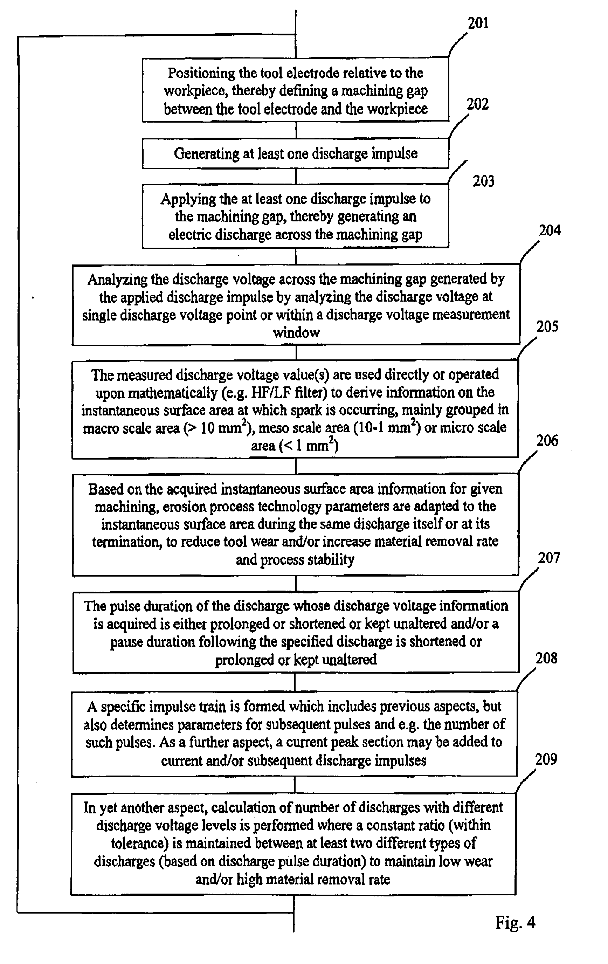

In the following, the method for the machining process with the composite tool electrode 110 is explained with reference to Fig. 4 illustrating a flow diagram of a control method for controlling the EDM apparatus 1.

As discussed above, at first the tool electrode 110 is positioned relative to the workpiece 12, such that a pre-defined machining gap 13 exists between the tool electrode 110 and the workpiece 12, step 201. Then, the generator of the EDM apparatus 1 generates at least one discharge impulse, which is a pilot impulse discussed above, step 202. The discharge impulse is applied across the machining gap 13, thereby generating an electric discharge (i.e. spark) across the machining gap, step 203. The spark is either between the small structure 111a and the workpiece 12 or between the large structure 111b and the workpiece.

As discussed above, as the discharge voltage is indicative of the instantaneous eroding surface area size or dimension type, it is possible to detect whether the spark is at the small structure 111a of the tool electrode or at the large structure 111b of the tool electrode 110 by analyzing the discharge voltage (and/or current) across the machining gap 13, which is generated by the applied discharge impulse or impulses, step 204. The analysis can be performed such that single discharge voltages are measured at single points or that the discharge voltage is measured in accordance with a measurement window for the discharge voltage.

Based on this analysis of the discharge voltage (and/or current) information of a given discharge, a type of dimension of an instantaneous eroding surface area of the tool electrode 110 is determined, step 205. For example, in the case that the electric discharge occurs between the small structure 111a and the workpiece 12, it is determined that the instantaneous eroding surface area is in accordance with the micro-scale dimension type, step 205. In the case that the electric discharge occurs between the large structure 111 b of the composite electrode 110 and the workpiece 12, it is determined that the instantaneous eroding surface area is in accordance with a meso-scale dimension type, step 205.

The mapping between the analyzed discharge voltage and the associated instantaneous eroding surface area type is performed directly in some embodiments and/or by applying a mathematical function or a filter, such as a HF/LF filter.

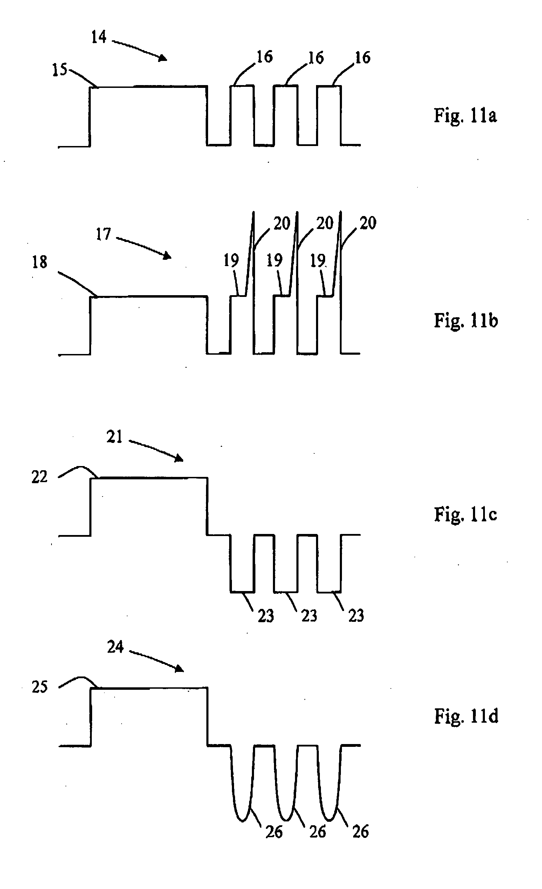

On the basis of the determined dimension type of the instantaneous eroding surface area of the respective determined structure, i.e. small structure 111a or large structure 111b, an associated optimized set of process technology parameters is determined, step 206. There are at least two different sets of process technology parameters predefined in the present embodiment and stored in the EDM apparatus 1, for example a meso-scale discharge pattern 33, which is illustrated in Fig. 3, and a micro-scale discharge pattern, such as one of the micro-scale discharge patterns 14, 17, 21, 24, as illustrated Fig. 11a-d, and which are explained in more detail below. The present invention is not restricted in this regard, but, generally, discharge impulse patterns or a ratio between at least two different discharge types (based on pulse duration) can be predefined for any kind of different dimension type, as also discussed above.

The set of process technology parameters is adapted, based on the determined instantaneous eroding surface area where the current spark is occurring. A pulse duration of this spark may be prolonged or shortened or kept unaltered. Additionally, a pause duration following the specified current discharge can be prolonged, shortened or kept unaltered, step 207.

Additionally, a specific impulse train may be selected during the current discharge based on its discharge voltage information and may be applied to the machining gap 13 where the specified discharge may be part of the selected impulse train or a separate impulse train may be applied at termination of specified discharge, step 208. The specific impulse train is formed based on the set of process technology parameters which are determined on the basis of the determined instantaneous eroding surface area. Various parameters of the specific impulse train can be adapted, such as parameters for subsequent pulses and e.g. the number of such pulses within the impulse train. A current peak section can also be added to current discharge impulses for the current electric discharge and/or subsequent discharge impulses.

As an alternative or combined with steps 206-208, for at least one distinct discharge voltage level, at least two different types of pulses (based on pulse duration) are generated and a ratio between them is kept constant at a specified value within given tolerance, step 209. As discussed above a first type of discharge impulse causes the formation of a protective layer on the tool electrode, while a second type causes wear on the tool electrode and its protective layer, respectively.

In some embodiments, instead of using predefined process technology parameters, the parameters may also be dynamically generated to perform above defined functions. For example, an arc control/suppression mechanism may be used also to dynamically generate at least two different discharge types within process. In still other embodiments, also a combination of predefined and dynamically generated process technology parameters is used.

The steps 201-209 are repeated during machining until the machining process is finished.

In the following the discharge impulse patterns for the large structure 111b and the small structure 111a are explained.

Fig. 3 shows a discharge impulse pattern 33 which is optimized for macro- or meso-scale structures, such as structure 111b of the tool electrode 110. Fig. 3 visualizes the impulse duration of discharge impulses on the x-axis and a discharge current of the discharge impulses on the y-axis. The discharge impulse pattern 33 has impulse trains 34 and impulse pauses 35 between the impulse trains 34. Each impulse train 34 has three applied discharge impulses 37, wherein the discharge impulses 37 may have the same impulse duration. The discharge impulses 37 are each separated with an impulse pause 36 from each other. The impulse pause 35 between the impulse trains 34 is longer than the impulse pause 36 between the several discharge impulses 37 within an impulse train 34, such that there is enough time for recovery of the machining gap 13 between application of consecutive impulse trains 34 and to maintain the desired current density during machining.

Figs. 11a to 11d illustrate different impulse trains which are used in different micro scale instantaneous eroding surface area discharge impulse patterns in different embodiments. The Figs. 11a to 11d visualize the impulse duration of the impulse train on the x-axis and a discharge current of the impulse train on the y-axis.

Fig. 11a illustrates an impulse train 14 which has a first type discharge impulse 15 for forming a protective layer on the tool electrode 111a, as discussed above, and three consecutive second type discharge impulses 16 with shorter pulse duration for eroding the protective layer on the tool electrode 111a and the workpiece 12, as discussed above. The discharge impulses 15 and 16 have a rectangular shape. The discharge current is the same for the discharge impulses 15 and 16 of the impulse train 14.

Moreover, also the off-time between the discharge impulse 15 for forming the protective layer and the first erosion discharge impulse 16 as well as between the single erosion discharge impulses 16 are identical in the present embodiment.

The impulse train 14 is applied to the small surface 111a of tool electrode 110 in order to perform the corresponding machining of the workpiece 12.

Between the application of single impulse trains 14 an off-time can be used. During the off-time the machining gap, the tool electrode and the workpiece recover such that in some embodiments the overall machining rate is higher than in embodiments where no or only a small off-time is present between single Impulse trains. This pause duration also maintains current density at desired value on a given instantaneous eroding surface area.

As mentioned above, the impulse durations, the off-times between the impulses, the number of the erosion discharge impulses, the discharge current, the off-time between impulse trains, pulse type (initial current, final current, path taken for rise of current) etc., depend i.a. on the materials used for the tool electrode and the workpiece 12 and the shape of the tool electrode 11, dielectric etc. These parameters can be pre-stored and/or pre-set in the die-sinking EDM apparatus 1. In other embodiments, these parameters can be dynamically determined, e.g. by analyzing machining parameters, such as variations in the discharge voltage and/or ignition delay time.

In some embodiments, also other impulse trains can be used:

For example, in some embodiments an impulse train 17, as illustrated in Fig. 11b, which is similar to the impulse train 14 of Fig. 11a, has a protective layer forming discharge impulse 18 and three erosion discharge impulses 19 which each have a peak section 20. The peak sections 20 comprise a peak in the discharge current, which is higher in current than the remaining sections of each of the erosion discharge impulses 19. This high peak current enhances the machining rate in some embodiments, since the high discharge current allows increased erosion of the workpiece 12 and/or of the tool electrode, respectively.

As illustrated in Fig. 11c, in some embodiments an impulse train 21, which is similar to the impulse train 14 of Fig. 11a, has a protective layer discharge impulse 22 followed by three erosion discharge impulses 23 with negative polarity. The change in the polarity between the first discharge impulse 22 of the impulse train 21 and the erosion discharge impulses 23 enhances the erosion of the protective layer on the tool electrode 11.

As illustrated in Fig. 11d, in some embodiments, an impulse train 23 has a first discharge impulse 25 and three erosion discharge impulses 26 which are generated by a capacitive discharge. The erosion discharge impulses 26 have a negative polarity. Here, also the first type discharge impulse 25 may have negative polarity.

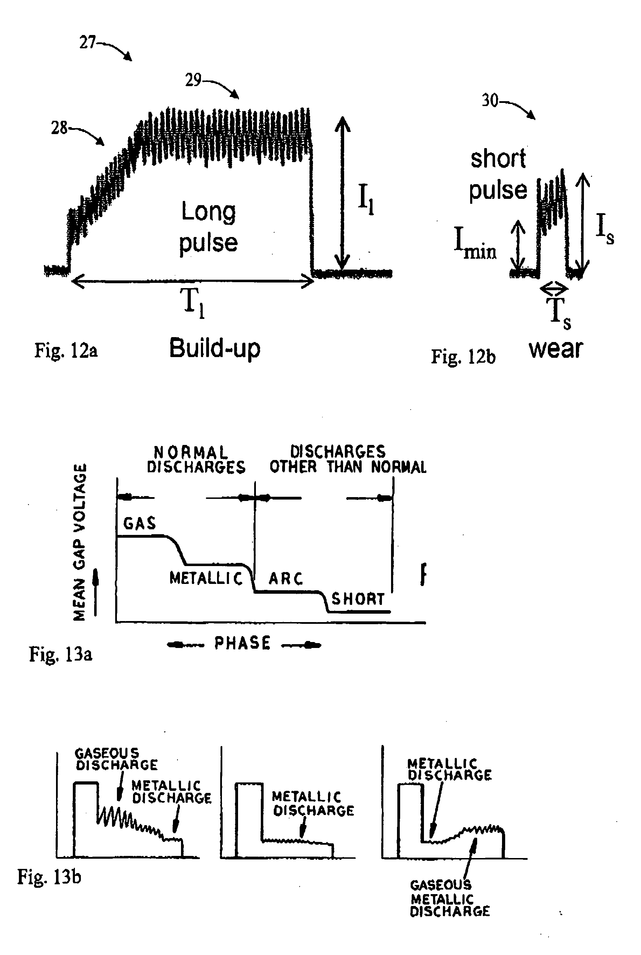

In order to further improve the machining rate and/or reduce tool wear, in some embodiments and as illustrated in Fig. 12a, a first type discharge impulse 27 with longer impulse duration T_{L} for build-up of the protective layer has an increasing edge section 28 and a constant section 29. The increasing edge section 28 starts with a lower initial discharge current and the discharge current is increased up to the final current I_{L} of the constant current region 29 of the discharge impulse 27.

A short erosion discharge impulse 30, as illustrated in Fig. 12b, has an increasing current over the whole impulse duration Tₛ. The current increase from a minimum initial discharge current Iₘᵢₙ up to a maximum discharge current Iₛ. The short discharge impulse 30 makes wear on the tool electrode 11 and workpiece 12, as discussed above. The increasing discharge current from Iₘᵢₙ to Is enhances the erosion of the tool electrode 11 and the workpiece 12, respectively. The path for current rise 28 here also makes it possible to apply a higher final current per pulse. Such current rise paths may also make faster stabilization of discharge voltage of spark in some embodiments, and, thus, can facilitate a measurement window of discharge voltage within few microseconds after breakdown.

In some embodiments, also for transistor type pulses by reducing the switching noise, the discharge voltage value dispersion may be reduced which results in better discharge voltage information analysis.

The above discussed shapes of the long impulse 27 (Fig. 12a) and the short impulse 30 (Fig. 12b) can be applied to any type of impulse trains, and in particular to the impulse trains 14, 17, 21 and 24 as illustrated in Figs. 11a to 11d and as discussed above.

In the following, aspects of the discharge voltage/current analysis are described:
Fig. 5a and 5b show an embodiment of a discharge voltage information measurement method. Figs. 5a and 5b illustrate the discharge voltage (upper section) and discharge current (lower section) on the y-axis as a function of time (x-axis).

In some embodiments, a measurement window 84 (Fig. 5b) can be used to measure the current discharge voltage of the current spark. This measurement window 84 shown in Fig. 5b may have single voltage measurement value or multiple voltage measurement values as a function of time. This measurement window 84 can be predefined to begin at a time Tₒᵤₜ after breakdown of the electric discharge, shown at reference sign 82 in Fig. 5b. The typical value for Tₒᵤₜ lies between 0.1 µs to 250 µs at end of which a measurement window 84 Is applied for a defined time duration of Tₘₑₛ 83, as shown in Fig. 5b.

The value of Tₘₑₛ may be preset and be defined In terms of time (µs) or in terms of number of discharge voltage values (e.g. 10 values) acquired at a given sampling rate (e.g. every 1µs). The measured discharge voltage value(s) is then used directly to indicate the instantaneous eroding surface area at which a spark is occurring and a set of process technology parameters optimised for the determined instantaneous eroding surface area is applied to the machining gap 13 either during the same discharge or at termination of the discharge pulse.

In another embodiment, the discharge voltage values are mathematically operated. For instance, a HF-filter or LF-filter or both are used to acquire discharge voltage information in order to determine the instantaneous eroding surface area of a given discharge. As mentioned above, the appropriate set of process technology parameters is then applied.

In still other embodiments, a maximum 80 and a minimum 81 discharge voltage value is determined based on measurements or comparators are used instead of collecting discharge voltage values for the process technology parameter adaptation.

Fig. 6 illustrates the same measuring method for two distinct surface areas 41, 42 on a single tool electrode 40. In this embodiment, during a spark discharge the discharge voltage of the spark varies depending on the location of the spark either on feature with larger surface area 41 or smaller surface area 42. Depending on the detected discharge voltage information an appropriate set of process technology parameters is determined for the respective surface areas 41 and 42 and is applied to the machining gap 13 either during the same discharge impulse or at the end of the discharge impulse.

Fig. 7a shows an embodiment of a process technology parameter adaptation, where after gathering of discharge voltage information within a measurement window 44, the duration of the given (current) impulse, which had originally a length 47, is kept unaltered or is prolonged 45 or shortened 46 depending on predefined values stored In EDM equipment 1, which correlate to corresponding instantaneous eroding surface areas at which a spark is occurring.

In Fig. 7b another embodiment of a process technology parameter adaptation is shown, where after the analysis of the discharge voltage within a measurement window 48, the pulse duration of an impulse may be changed or unaltered, as described in connection with Fig. 7a. But, additionally, in this embodiment, the pause duration following the analyzed impulse may be altered, i.e. prolonged or shortened, or kept unaltered in order to maintain process stability and achieve a desired current density over the determined instantaneous eroding surface area, on the basis of the voltage information acquired from measurement window 48. The subsequent impulse has also a measurement window 58, which further determines a process technology parameter adaptation based on the indicated instantaneous eroding surface area information.

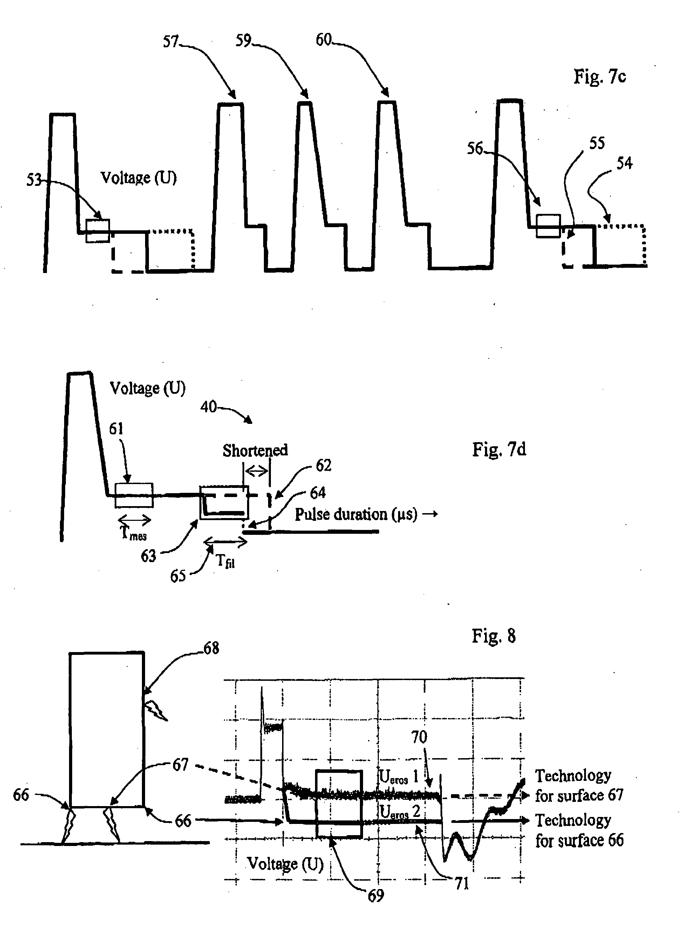

In still another embodiment, the process technology parameter adaptation based on the detected instantaneous eroding surface area from discharge voltage information comprises the formation of a specific impulse train. As shown in Fig. 7c, depending on the analyzed discharge voltage information acquired during a measurement window 53, the duration of the given pulse may be changed or left unaltered. In addition, the analyzed impulse may be considered as a part of an impulse train having impulses 57, 69, 60 with predetermined parameters, and the number of such impulses 57, 59, 60 can be altered by a control and applied to machining gap 13, after the given impulse for which the discharge voltage information was acquired and analyzed. Here, one may apply discharge voltage measurement window or exclude such measurement for pulses 57, 59, 60. After the determined pause duration followed by the last pulse 60 of the impulse train, a standard pulse for a given machining cycle is applied having a measurement window 56 to again adapt the process technology parameters for the detected instantaneous eroding surface area.

Fig. 7d depicts a further embodiment of a process control method, where at least one measurement window 61 is applied which may be parallel to or before another measurement window 63. The purpose of the measurement window 63 may be the same as for the measurement window 61 or it may be used for other aspects of an adaptive process control. For example, in the present embodiment, the measurement window 63 with duration Tₘ65 may be applied for detection of an arc transition during the spark discharge. In this case, individually or combined with information from measurement window 61, information from measurement window 63 may be used to adapt process technology parameters or to stop further arc development by shortening an original pulse duration 62 to an impulse duration 64, thereby avoiding the damage of workpiece 12.

Fig. 8 illustrates yet another embodiment of process technology parameter adaptation based on discharge voltage information analysis. In this embodiment a tool electrode with no obvious distinct surface area features may have sparks with distinct discharge voltage value. At least two different discharge types are identified based on the analysis of the discharge voltage information during the machining process. As shown in Fig. 8, if the spark is occurring on the corner or edge 66 of the tool electrode, the respective discharge voltage information 71 during at least one measurement window 69 will be different from the same discharge voltage information for a spark occurring at a frontal face 67 or lateral face 68 of the tool electrode. Thus, by analyzing at least two distinct discharge voltage information the process technology parameters can be adapted correspondingly e.g. in the way described above in order to have a lower corner and edge wear of the tool electrode, to have a smaller undersize and a higher material removal rate.

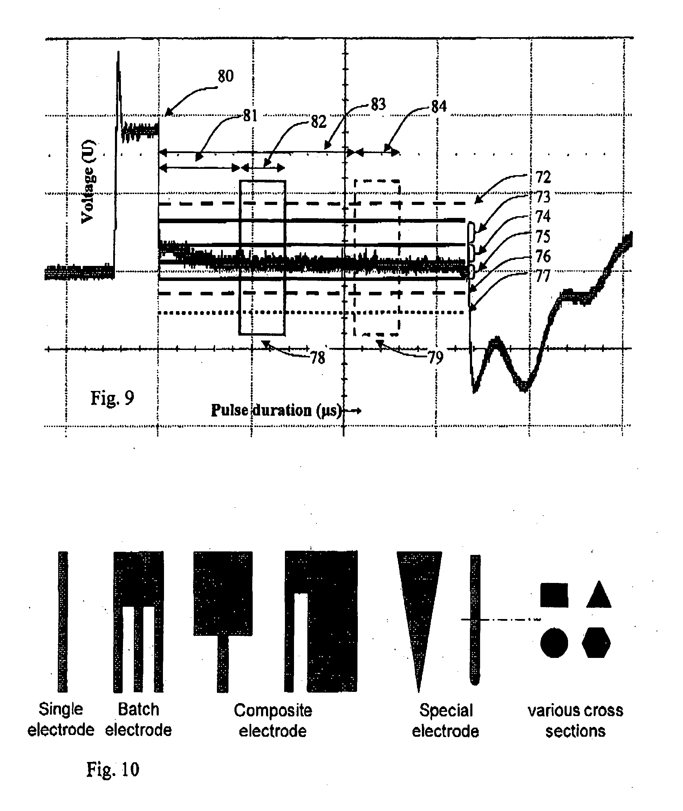

Fig. 9, illustrates discharge voltage information indicative of instantaneous eroding surface area, measurement windows and the variation of a respective discharge voltage according to an associated instantaneous eroding surface area. Here, the horizontal axis represents discharge impulse duration in microseconds and the vertical axis represents the discharge voltage in Volts.

When applying a discharge impulse 80 for a given current per pulse and a specific impulse type, after a time duration 81, the discharge voltage of the spark stabilizes to a value which can be measured by at least one measurement window 78 for a time duration 82 after an out time 81. In the present embodiment, the measured discharge voltage information in the respective ranges 73, 74 and 75 are indicative of a macro-, meso- or micro-scale type instantaneous eroding surface area. Additionally, there are voltage values 72 which are above the normal discharge values. The arc discharges have a lower discharge voltage compared to the discharge voltage of spark discharges 76, whereas short-circuit impulses have a lowest discharge voltage 77.

The ability to determine the instantaneous eroding surface area and the resolution mainly depends on resolution capability for voltage measurements. In some embodiments, e.g. with a resolution of 0.1-1 V one can detect multiple instantaneous eroding surface features within the discharge voltage level group 73. A spark on an instantaneous eroding surface area of 100 mm² will have a higher discharge voltage compared to a spark on an instantaneous surface eroding area of 30 mm² in spite of belonging to the same group 73 which is associated with macro-scale type instantaneous eroding surface areas. This allows a process technology parameter adaptation not only at microsecond or single spark level, but also a process technology parameter adaptation with high accuracy for smallest changes in the instantaneous eroding surface area within one group of discharge voltages, such as 73 or 74 or 75. Also, a high frequency (HF)- or low frequency (LF)-information of the discharge voltage may be used in some embodiments to detect the type of instantaneous eroding surface area on which a spark is occurring in real time.

Additionally, Fig. 9 shows a second measurement window 79 apart from measurement window 78 which is used in some embodiments for other adaptive process control aspects. This measurement window 79 with time length 84 is applied after a time duration 83. The process technology parameter adaptation is based, for example, on arc detection and control to avoid damage on the workpiece due to arcing. The typical values for the time window 81 are between 0.1 µs-1 ms, for the time window 82 between 0.1 µs-1 ms, and for the time window 83 between 0 µs-1 ms and for the time window 84 between 0.1 µs-1 ms.

Fig. 10 illustrates different embodiments of tool electrodes, such as a single tool electrode, a batch tool electrode, a composite tool electrode, a special tool electrode with different cross section surface areas and/or shapes such as polygon, circular, etc.

Fig. 13a, taken from US 4,376,880 A, shows a mean gap voltage or discharge voltage for different states of plasma, such as gas phase plasma, metal phase plasma, arc mode or short circuit. Whereas Fig. 13b illustrates evolution of such plasma states over pulse duration during a single discharge.

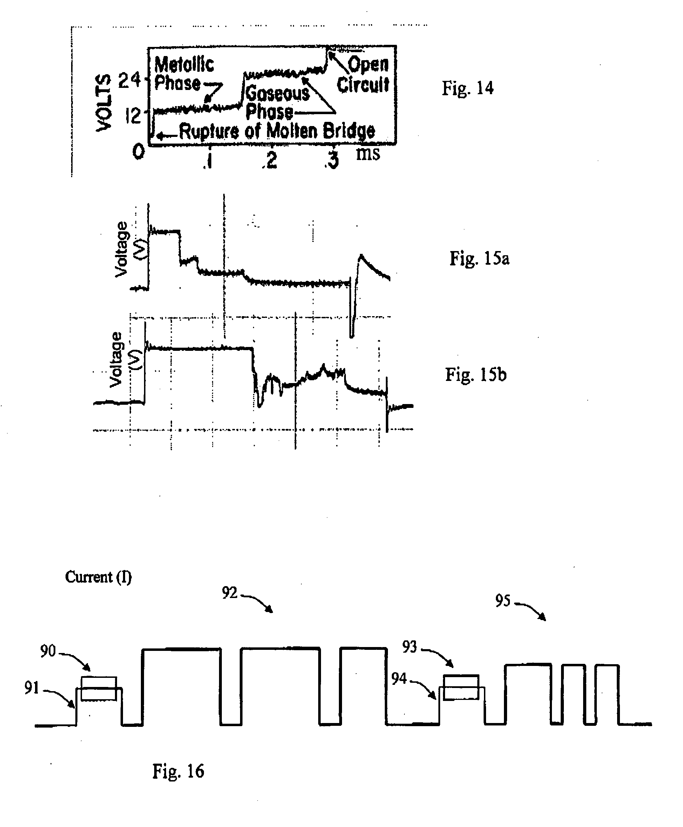

Fig. 14, taken from Ref. "Bobby" mentioned above, shows an example of different discharge voltages depending on the plasma state for spark plasma generated during opening of electrical contacts over larger time values.

Fig. 15a shows an embodiment where the discharge voltage has three separate discharge voltage levels during the same discharge and Fig. 15b illustrates a spark discharge example with instabilities which may damage a workpiece and/or a tool electrode.

Fig. 16 depicts an embodiment of a process measurement 'Detect & Adapt' strategy by applying pilot pulses for a tool electrode, such as shown in fig. 6 or fig. 8. Here, a very small sample of complete process is shown, where pilot pulses are applied and used to detect the instantaneous eroding surface area of the discharge. E.g. with a pilot pulse 91, a measurement window 90 indicates a discharge instantaneous eroding surface area 41 for fig. 6 and, thus, a respective set of process technology parameters in the form of discharge impulse train 92 Is applied. Again another pilot pulse 94 is applied depending on the measurement windows during the application of the set of technology parameters 92 or after a predetermined interval after a predefined point in time 91. There another measurement window 93 indicates a spark occurring at another instantaneous eroding surface 42 (fig. 6). Thus, based on predetermined sets of process technology parameters stored in a database, a process control adapts or selects the corresponding set of process technology parameters and generates in accordance with the selected set of process technology parameters a defined impulse train 95, which is optimized for the instantaneous eroding surface area 42 in fig. 6, within few microseconds after the measurement window 93.

Here, applying pilot pulses is only one aspect, where even the selected technology pulses can act as pilot pulses as well as machining pulses and perform same process control adaptation to increase material removal rate, decrease tool wear even for meso-micro instantaneous surface areas, achieve stable process, reduce resource requirements such as number of required electrodes, achieve smallest inner diameter of machine cavity, achieve high form precision and accuracy and thus improve overall process outputs.

Although the present invention is described in connection with a limited number of embodiments, it is evident that there may be allowed modifications and variants that do not depart from the concept and scope of the invention, which will be readily understood by those skilled in the art. All these modifications and variants are considered not to depart from the concept and scope of the invention, as defined by the appended claims.

## Claims

1. A method of controlling an electric discharge machining apparatus (1) having at least a tool electrode (11, 110) and a workpiece (12), the method comprising the steps of:
- positioning (201) the tool electrode (11, 110) relative to the workpiece (12), thereby defining a machining gap (13) between the tool electrode (11, 110) and the workpiece (12);
- generating (202) at least one discharge impulse;
- applying (203) the at least one discharge impulse to the machining gap (13), thereby generating an electric discharge across the machining gap (13);
- analysing (204) the discharge voltage and/or discharge current across the machining gap (13) generated by an applied pilot discharge Impulse for the current electric discharge generated by the application of the at least one discharge impulse;
- determining (205), based on the analysis of the discharge voltage and/or discharge current of the pilot discharge impulse, a type of dimension of an Instantaneous eroding surface area (105) of the tool electrode (11, 110) on which the current electric discharge is generated;
- determining (206) a set of process technology parameters on the basis of the determined dimension type of the instantaneous eroding surface area (105) of the tool electrode (11); and
- generating discharge impulses (37, 15, 16, 18, 19, 22, 23, 25, 26) in accordance with the determined process technology parameters and applying them to the machining gap (13).

2. The method of controlling an electric discharge machining apparatus according to claim 1, wherein a first set of process technology parameters (33) is determined when the determined dimension type of the instantaneous eroding surface area is of a first type, and wherein a second set of process technology parameters is determined when the determined dimension type of the instantaneous eroding surface area is of a second type, wherein the first (33) and the second (14, 17, 21, 24) set of process technology parameters are different from each other and the first and second dimension types of the instantaneous eroding surface areas are also different from each other.

3. The method of controlling an electric discharge machining apparatus according to any one of the preceding claims, wherein the tool electrode (110) comprises at least two instantaneous eroding surface areas having different dimensions types and/or wherein the tool electrode comprises at least two instantaneous eroding surface areas causing an electric discharge with at least two distinct discharge voltage values.

4. The method of controlling an electric discharge machining apparatus according to any one of the preceding claims, further comprising the step of determining the number of instantaneous eroding surface areas having different dimension types on the basis of the discharge voltage and/or discharge current analysis.

5. The method of controlling an electric discharge machining apparatus according to any one of the preceding claims, wherein the instantaneous eroding surface area Is at least one of: a corner, an edge, a lateral face, or a frontal face of the electrode.

6. The method of controlling an electric discharge machining apparatus according to any one of the preceding claims, wherein a first dimension type is indicative of a structure of the tool electrode (110) being smaller than or equal to 1 mm² and/or having a dimension below 1 mm and a second dimension type is indicative of a structure of the tool electrode being larger than 1 mm² and/or having a dimension above 1 mm.

7. The method of controlling an electric discharge machining apparatus according to any one of the preceding claims, wherein a first set of process technology parameters (14, 17, 21, 24) is optimized for an eroding surface area of the tool electrode (110) which is smaller than or equal to 1 mm² and a second set of process technology parameters (33) is optimized for a surface area of the tool electrode (110) which is larger than 1 mm².

8. The method of controlling an electric discharge machining apparatus according to any one of the preceding claims, wherein a surface roughness to be produced on the workpiece (12) is determined on the basis of the determined instantaneous eroding surface area dimension type.

9. The method of controlling an electric discharge machining apparatus according to any one of the preceding claims, wherein the first and/or second set of process technology parameters defines a discharge impulse pattern (14, 17, 21, 24, 33).

10. The method of controlling an electric discharge machining apparatus according to claim 9, wherein the set of process technology parameters predefines a discharge impulse pattern (14, 17, 21, 24) comprising at least one first type discharge impulse (15, 18, 22, 25, 27) and at least one second type discharge impulse (16, 19, 23, 26, 30), wherein the first type discharge impulse (15, 18, 22, 25, 27) has a longer impulse duration (T_{L}) than the impulse duration (T_{S}) of the single second type discharge impulse (16, 19, 23, 26, 30) and wherein the first type discharge impulse (15, 18, 22, 25, 27) causes the formation of a protective film against wear on the tool electrode (11, 110) and the second type discharge impulse (16, 19, 23, 26, 30) causes erosion at least on the tool electrode (11, 110).

11. The method of controlling an electric discharge machining apparatus according to claim 10, wherein the discharge impulse pattern (14, 17, 21, 24) comprising the first type and second type discharge impulses is determined when the determined instantaneous eroding surface dimension type is indicative of an eroding surface area having an instantaneous surface area lower than or equal to 1 mm² and/or having a dimension below 1 mm.

12. The method of controlling an electric discharge machining apparatus according to claims 10 and 11, wherein the ratio of first and second type discharge impulses is kept constant in order to cause a predefined wear on the tool electrode.

13. The method of controlling an electric discharge machining apparatus according to any one of the preceding claims, further comprising the step of reducing switching noise for impulses being generated by a linear current source and/or a resistor type generator in order to decrease discharge voltage value dispersion.

14. The method of controlling an electric discharge machining apparatus according to any one of the preceding claims, further comprising the step of reducing the electric discharge time in the case of determining a discharge voltage value above a predefined value.

15. The method of controlling an electric discharge machining apparatus according to any one of the preceding claims, wherein the discharge impulses (37, 15, 16, 18, 19, 22, 23, 25, 26) being generated in accordance with the determined set of process technology parameters are applied during the current electric discharge and/or during a consecutive electric discharge occurring at the same detected instantaneous eroding surface area.

16. An electric discharge machining apparatus comprising:
- a tool electrode (11, 110),
- a working table (3) for receiving a workpiece (12),
- an impulse generator (4) for generating discharge impulses, and
- a control (2) for controlling the electric discharge machining apparatus (1),
wherein the control (2) is adapted for performing the method of any one of the preceding claims.

17. The electric discharge machining apparatus according to claim 16, wherein the apparatus is a die-sinking electric discharge machining apparatus or a drilling electric discharge machining apparatus or a milling electric discharge machining apparatus.

## Patentansprüche

1. Verfahren zum Steuern einer Elektroerosions-Bearbeitungsvorrichtung (1), die mindestens eine Werkzeugelektrode (11, 110) und ein Werkstück (12) aufweist, wobei das Verfahren die Schritte umfasst zum:
- Positionieren (201) der Werkzeugelektrode (11, 110) bezüglich des Werkstücks (12), wodurch ein Bearbeitungsspalt (13) zwischen der Werkzeugelektrode (11, 110) und dem Werkstück (12) festgelegt wird;
- Erzeugen (202) mindestens eines Entladungsstoßes;
- Anwenden (203) des mindestens einen Entladungsstoßes auf den Bearbeitungsspalt (13), wodurch eine elektrische Entladung über den Bearbeitungsspalt (13) hinweg erzeugt wird;
- Analysieren (204) der Entladungsspannung und/oder des Entladungsstromes über den Bearbeitungsspalt (13) hinweg, die durch einen angewendeten Pilot-Entladungsstoß für die aktuelle elektrische Entladung erzeugt wurden, welche durch die Anwendung des mindestens einen Entladungsstoßes erzeugt wird;
- Bestimmen (205) eines Abmessungstyps eines momentanen Erodierungsflächenbereichs (105) der Werkzeugelektrode (11, 110), auf welcher die aktuelle elektrische Entladung erzeugt wird, basierend auf der Analyse der Entladungsspannung und/oder des Entladungsstromes des Pilot-Entladungsstoßes;
- Bestimmen (206) eines Satzes von Prozesstechnologieparametern auf der Basis des bestimmten Abmessungstyps des momentanen Erodierungsflächenbereichs (105) der Werkzeugelektrode (11); und
- Erzeugen von Entladungsstößen (37, 15, 16, 18, 19, 22, 23, 25, 26) entsprechend den bestimmten Prozesstechnologieparametern und Anwendung derselben auf den Bearbeitungsspalt (13).

2. Verfahren zum Steuern einer Elektroerosions-Bearbeitungsvorrichtung nach Anspruch 1, wobei ein erster Satz von Prozesstechnologieparametern (33) bestimmt wird, wenn der bestimmte Abmessungstyp des momentanen Erodierungsflächenbereichs von einem ersten Typ ist, und wobei ein zweiter Satz von Prozesstechnologieparametern bestimmt wird, wenn der bestimmte Abmessungstyp des momentanen Erodierungsflächenbereichs von einem zweiten Typ ist, wobei sich der erste (33) und der zweite (14, 17, 21, 24) Satz von Prozesstechnologieparametern voneinander unterscheiden und sich auch der erste und zweite Abmessungstyp der momentanen Erodierungsflächenbereiche voneinander unterscheiden.

3. Verfahren zum Steuern einer Elektroerosions-Bearbeitungsvorrichtung nach einem der vorhergehenden Ansprüche, wobei die Werkzeugelektrode (110) mindestens zwei momentane Erodierungsflächenbereiche aufweist, die unterschiedliche Abmessungstypen aufweisen, und/oder wobei die Werkzeugelektrode mindestens zwei momentane Erodierungsflächenbereiche aufweist, die eine elektrische Entladung mit mindestens zwei sich unterscheidenden Entladungsspannungswerten verursachen.

4. Verfahren zum Steuern einer Elektroerosions-Bearbeitungsvorrichtung nach einem der vorhergehenden Ansprüche, ferner den Schritt umfassend, die Anzahl von momentanen Erodierungsflächenbereichen, die unterschiedliche Abmessungstypen aufweisen, auf der Grundlage der Entladungsspannungs- und/oder Entladungsstrom-Analyse zu bestimmen.

5. Verfahren zum Steuern einer Elektroerosions-Bearbeitungsvorrichtung nach einem der vorhergehenden Ansprüche, wobei der momentane Erodierungsflächenbereich mindestens einer der folgenden ist: eine Ecke, eine Kante, eine Seitenfläche oder eine Vorderfläche der Elektrode.

6. Verfahren zum Steuern einer Elektroerosions-Bearbeitungsvorrichtung nach einem der vorhergehenden Ansprüche, wobei der erste Abmessungstyp eine Struktur der Werkzeugelektrode (110) kennzeichnet, die kleiner als oder gleich 1 mm² ist und/oder eine Abmessung unter 1 mm aufweist, und ein zweiter Abmessungstyp eine Struktur der Werkzeugelektrode kennzeichnet, die größer als 1 mm² ist und/oder eine Abmessung über 1 mm aufweist.

7. Verfahren zum Steuern einer Elektroerosions-Bearbeitungsvorrichtung nach einem der vorhergehenden Ansprüche, wobei ein erster Satz von Prozesstechnologieparametern (14, 17, 21, 24) für einen Erodierungsflächenbereich der Werkzeugelektrode (110) optimiert ist, der kleiner als oder gleich 1 mm² ist, und ein zweiter Satz von Prozesstechnologieparametern (33) für einen Flächenbereich der Werkzeugelektrode (110) optimiert ist, der größer als 1 mm² ist.

8. Verfahren zum Steuern einer Elektroerosions-Bearbeitungsvorrichtung nach einem der vorhergehenden Ansprüche, wobei die Oberflächenrauigkeit, die auf dem Werkstück (12) zu erzeugen ist, auf der Basis des bestimmten Abmessungstyps des momentanen Erodierungsflächenbereichs bestimmt wird.

9. Verfahren zum Steuern einer Elektroerosions-Bearbeitungsvorrichtung nach einem der vorhergehenden Ansprüche, wobei der erste und/oder zweite Satz von Prozesstechnologieparametern ein Entladungsstoßmuster (14, 17, 21, 24, 33) festlegt.

10. Verfahren zum Steuern einer Elektroerosions-Bearbeitungsvorrichtung nach Anspruch 9, wobei der erste Satz von Prozesstechnologieparametern ein Entladungsstoßmuster (14, 17, 21, 24) vorherbestimmt, das mindestens einen Entladungsstoß vom ersten Typ (15, 18, 22, 25, 27) und mindestens einen Entladungsstoß vom zweiten Typ (16, 19, 23, 26, 30) aufweist, wobei der Entladungsstoß vom ersten Typ (15, 18, 22, 25, 27) eine längere Stoßdauer (T_{L}) als die Stoßdauer (T_{S}) des einzelnen Entladungsstoßes vom zweiten Typ (16, 19, 23, 26, 30) aufweist und wobei der Entladungsstoß vom ersten Typ (15, 18, 22, 25, 27) die Ausbildung eines Schutzfilms gegen Abtragung auf der Werkzeugelektrode (11, 110) verursacht und der Entladungsstoß vom zweiten Typ (16, 19, 23, 26, 30) eine Erosion mindestens auf der Werkzeugelektrode (11, 110) verursacht.

11. Verfahren zum Steuern einer Elektroerosions-Bearbeitungsvorrichtung nach Anspruch 10, wobei das Entladungsstoßmuster (14, 17, 21, 24), das die Entladungsstöße vom ersten Typ und zweiten Typ aufweist, bestimmt wird, wenn der bestimmte Abmessungstyp der momentanen Erodierungsfläche einen Erodierungsflächenbereich kennzeichnet, der einen momentanen Flächenbereich aufweist, der kleiner als oder gleich 1 mm² ist und/oder eine Abmessung unter 1 mm aufweist.

12. Verfahren zum Steuern einer Elektroerosions-Bearbeitungsvorrichtung nach den Ansprüchen 10 und 11, wobei das Verhältnis der Entladungsstöße vom ersten Typ und zweiten Typ konstant gehalten wird, um eine vorherbestimmte Abtragung auf der Werkzeugelektrode zu erzeugen.

13. Verfahren zum Steuern einer Elektroerosions-Bearbeitungsvorrichtung nach einem der vorhergehenden Ansprüche, ferner den Schritt zum Verringern des Schaltrauschens für Stöße umfassend, die durch eine lineare Stromquelle und/oder einen Generator vom Widerstandstyp erzeugt werden, um die Entladespannungswerteverteilung zu reduzieren.

14. Verfahren zum Steuern einer Elektroerosions-Bearbeitungsvorrichtung nach einem der vorhergehenden Ansprüche, ferner den Schritt zum Verringern der elektrischen Entladungszeit in dem Fall umfassend, dass ein Entladungsspannungswert über einem vorherbestimmten Wert festgestellt wird.

15. Verfahren zum Steuern einer Elektroerosions-Bearbeitungsvorrichtung nach einem der vorhergehenden Ansprüche, wobei die Entladungsstöße (37, 15, 16, 18, 19, 22, 23, 25, 26), die entsprechend dem festgelegten Satz von Prozesstechnologieparametern erzeugt wurden, während der aktuellen elektrischen Entladung und/oder während einer nachfolgenden elektrischen Entladung, die an dem gleichen erfassten momentanen Erodierungsflächenbereich stattfindet, angewendet werden.

16. Elektroerosions-Bearbeitungsvorrichtung mit:
- einer Werkzeugelektrode (11, 110),
- einer Arbeitsplatte (3) zur Aufnahme eines Werkstücks (12),
- einem Stoßgenerator (4) zum Erzeugen von Entladungsstößen und
- einer Steuerung (2) zum Steuern der Elektroerosions-Bearbeitungsvorrichtung (1),
wobei die Steuerung (2) geeignet ist, das Verfahren nach einem der vorhergehenden Ansprüche auszuführen.

17. Elektroerosions-Bearbeitungsvorrichtung nach Anspruch 16, wobei die Vorrichtung eine Elektroerosions-Gesenkfräsbearbeitungsvorrichtung oder eine Elektroerosions-Bohrbearbeitungsvorrichtung oder eine Elektroerosions-Fräsbearbeitungsvorrichtung ist.

## Revendications

1. Procédé de commande d'un appareil d'usinage (1) par décharges électriques présentant au moins une électrode d'outil (11, 110) et une pièce d'oeuvre (12), le procédé comportant les étapes qui consistent à :
placer (201) l'électrode d'outil (11, 110) par rapport à la pièce d'oeuvre (12) pour ainsi définir un interstice d'usinage (13) entre l'électrode d'outil (11, 110) et la pièce d'oeuvre (12),
produire (202) au moins une impulsion de décharge,
appliquer (203) la ou les impulsions de décharge sur l'interstice d'usinage (13) pour ainsi provoquer une décharge électrique à travers l'interstice d'usinage (13),
analyser (204) la tension et/ou le courant de décharge produit à travers l'interstice d'usinage (13) par une impulsion pilote de décharge appliquée pour la décharge de courant électrique produite par l'application de la ou des impulsions de décharge,
sur la base de l'analyse de la tension et/ou du courant de décharge de l'impulsion pilote de décharge, déterminer (205) le type de dimension d'une superficie instantanée d'érosion (105) de l'électrode d'outil (11, 110) sur laquelle la décharge de courant électrique est produite,
déterminer (206) un jeu de paramètres techniques de traitement sur la base du type de dimension de superficie instantanée d'érosion (105) de l'électrode d'outil (11) qui a été déterminé et
produire des impulsions de décharge (37, 15, 16, 18, 19, 22, 23, 25, 26) selon les paramètres techniques de traitement qui ont été déterminés et les appliquer sur l'interstice d'usinage (13).

2. Procédé de commande d'un appareil d'usinage par décharges électriques selon la revendication 1, dans lequel un premier jeu de paramètres techniques de traitement (33) est déterminé lorsque le type de dimension de la superficie instantanée d'érosion est d'un premier type et dans lequel un deuxième jeu de paramètres techniques de traitement est déterminé lorsque le type de dimension qui a été déterminé pour la superficie instantanée d'érosion est d'un deuxième type, le premier (33) et le deuxième (14, 17, 21, 24) jeu de paramètres techniques de traitement étant différents l'un de l'autre et le premier et le deuxième type de dimension de la superficie instantanée d'érosion étant également différents l'un de l'autre.

3. Procédé de commande d'un appareil d'usinage par décharges électriques selon l'une quelconque des revendications précédentes, dans lequel l'électrode d'outil (110) comprend au moins deux superficies instantanées d'érosion présentant différents types de dimension et/ou dans lequel l'électrode d'outil comprend au moins deux superficies instantanées d'érosion amenant des décharges électriques présentant au moins deux valeurs distinctes de tension de décharge.

4. Procédé de commande d'un appareil d'usinage par décharges électriques selon l'une quelconque des revendications précédentes, comprenant en outre l'étape qui consiste à déterminer le nombre de superficies instantanées d'érosion présentant différents types de dimension sur la base de l'analyse de la tension de décharge et/ou du courant de décharge.

5. Procédé de commande d'un appareil d'usinage par décharges électriques selon l'une quelconque des revendications précédentes, dans lequel la superficie instantanée d'érosion est celle d'un coin et/ou d'une face frontale de l'électrode.

6. Procédé de commande d'un appareil d'usinage par décharges électriques selon l'une quelconque des revendications précédentes, dans lequel un premier type de dimension indique une structure d'électrode du type (110) plus petite ou égale à 1 mm² et/ou une dimension inférieure à 1 mm et un deuxième type de dimension indique une structure de l'électrode d'outil supérieure à 1 mm² et/ou d'une dimension supérieure à 1 mm.

7. Procédé de commande d'un appareil d'usinage par décharges électriques selon l'une quelconque des revendications précédentes, dans lequel un premier jeu de paramètres techniques de traitement (14, 17, 21, 24) est optimisé pour une superficie d'érosion de l'électrode d'outil (110) inférieure ou égale à 1 mm² et un deuxième jeu de paramètres techniques de traitement (33) est optimisé pour une superficie d'électrode d'outil (110) supérieure à 1 mm².

8. Procédé de commande d'un appareil d'usinage par décharges électriques selon l'une quelconque des revendications précédentes, dans lequel la rugosité de surface à produire sur la pièce d'oeuvre (12) est déterminée sur la base du type de dimension de la superficie instantanée d'érosion qui a été déterminé.

9. Procédé de commande d'un appareil d'usinage par décharges électriques selon l'une quelconque des revendications précédentes, dans lequel le premier et/ou le deuxième jeu de paramètres techniques de traitement définissent un motif (14, 17, 21, 24, 33) d'impulsions de décharge.

10. Procédé de commande d'un appareil d'usinage par décharges électriques selon la revendication 9, dans lequel le jeu de paramètres techniques de traitement prédéfinit un motif (14, 17, 21, 24) d'impulsions de décharge qui comprend au moins un premier type d'impulsions de décharge (15, 18, 22, 25, 27) et au moins un deuxième type d'impulsions de décharge (16, 19, 23, 26, 30), le premier type d'impulsions de décharge (15, 18, 22, 25, 27) présentant une durée d'impulsion (T_{L}) supérieure à la durée d'impulsion (T_{S}) de l'unique deuxième type d'impulsions de décharge (16, 19, 23, 26, 30), et dans lequel le premier type d'impulsions de décharge (15, 18, 22, 25, 27) provoque la formation d'un film protecteur contre l'usure sur l'électrode d'outil (11, 110) et le deuxième type d'impulsion de décharge (16, 19, 23, 26, 30) provoque l'érosion d'au moins l'électrode d'outil (11, 110).

11. Procédé de commande d'un appareil d'usinage par décharges électriques selon la revendication 10, dans lequel le motif (14, 17, 21, 24) d'impulsions de décharge comprenant le premier type et le deuxième type d'impulsions de décharge est déterminé lorsque le type de dimension de superficie instantanée d'érosion indique une superficie d'érosion dont la superficie instantanée est inférieure ou égale à 1 mm² et/ou est d'une dimension inférieure à 1 mm.

12. Procédé de commande d'un appareil d'usinage par décharges électriques selon les revendications 10 et 11, dans lequel le rapport entre les impulsions de décharge du premier et du deuxième type est maintenu constant pour amener une usure prédéterminée de l'électrode d'outil.

13. Procédé de commande d'un appareil d'usinage par décharges électriques selon l'une quelconque des revendications précédentes, comprenant en outre l'étape qui consiste à réduire le bruit des commutations d'impulsions produites par une source de courant linéaire et/ou d'un générateur de type à résistance pour diminuer la dispersion des valeurs de tension de décharge.

14. Procédé de commande d'un appareil d'usinage par décharges électriques selon l'une quelconque des revendications précédentes, comprenant en outre l'étape qui consiste à réduire la durée de décharge électrique lorsqu'il a été déterminé que la valeur de la tension de décharge est supérieure à une valeur prédéfinie.

15. Procédé de commande d'un appareil d'usinage par décharges électriques selon l'une quelconque des revendications précédentes, dans lequel les impulsions de décharge (37, 15, 16, 18, 19, 22, 23, 25, 26) produites selon le jeu défini de paramètres techniques de traitement sont appliquées pendant la décharge de courant électrique et/ou pendant une décharge électrique suivante qui a lieu sur la même superficie instantanée d'érosion.

16. Appareil d'usinage par décharges électriques comprenant :
une électrode d'outil (11, 110),
une table de travail (3) qui reçoit une pièce d'oeuvre (12),
un générateur d'impulsions (4) qui génère des impulsions de décharge et
une commande (2) qui commande l'appareil (1) d'usinage par décharges électriques, la commande (2) étant adaptée pour exécuter le procédé selon l'une quelconque des revendications précédentes.

17. Appareil d'usinage par décharges électriques selon la revendication 16, dans lequel l'appareil est un appareil d'usinage par décharges électriques à matrice plongeante ou un appareil d'usinage par décharges électriques pour le forage ou un appareil d'usinage par décharges électriques pour le meulage.
